# EUROPÄISCHE PATENTSCHRIFT

(11) **EP 3 321 832 B1**
(45) Veröffentlichungstag und Bekanntmachung des Hinweises auf die Patenterteilung: **05.08.2020**
(21) Anmeldenummer: 17200668.6
(22) Anmeldetag: 08.11.2017
(51) Int. Cl.: G06F 21/31, G06F 21/33, H04L 29/06

(54) **VERTEILEN ZUM LESEN VON ATTRIBUTEN AUS EINEM ID-TOKEN**
DISTRIBUTION FOR READING ATTRIBUTES FROM AN ID TOKEN
DISTRIBUTION DE LECTURE D'ATTRIBUTS À PARTIR D'UN JETON D'IDENTIFICATION

(30) Priorität: 11.11.2016 DE 102016222170
(43) Veröffentlichungstag der Anmeldung: 16.05.2018
(73) Patentinhaber: Bundesdruckerei GmbH, 10969 Berlin (DE)
(72) Erfinder: WIRTH, Dr. Klaus-Dieter, 12683 Berlin (DE); SCHOLZE, Steffen, 13469 Berlin (DE); SCHWAN, Dr. Matthias, 10437 Berlin (DE); MÜLLER, Frank, 10435 Berlin (DE); FILZHUTH, Dr. Elke, 12359 Berlin (DE)
(74) Vertreter: Richardt Patentanwälte PartG mbB

(56) Entgegenhaltungen:
- "Advanced Security Mechanisms for Machine Readable Travel Documents and eIDAS Token - Part 2", , 16. Dezember 2014 (2014-12-16), XP055257174, Gefunden im Internet: URL:https://www.bsi.bund.de/SharedDocs/Dow nloads/DE/BSI/Publikationen/TechnischeRich tlinien/TR03130/TR-03130_TR-eID-Server [gefunden am 2016-03-10]
- "Technical Guideline eID-Server", , 15. Januar 2014 (2014-01-15), XP055256439, Gefunden im Internet: URL:https://www.bsi.bund.de/SharedDocs/Dow nloads/DE/BSI/Publikationen/TechnischeRich tlinien/TR03130/TR-03130_TR-eID-Server_Par t1.pdf?__blob=publicationFile
- "Advanced Security Mechanisms for Machine Readable Travel Documents and eIDAS Token -", , 6. Februar 2015 (2015-02-06), XP055250604, Gefunden im Internet: URL:https://www.bsi.bund.de/SharedDocs/Dow nloads/EN/BSI/Publications/TechGuidelines/ TR03110/BSI_TR-03110_Part-4_V2-2.pdf?__blo b=publicationFile&v=1 [gefunden am 2016-02-16]

## Beschreibung

Die Erfindung betrifft ein Verfahren zum Lesen von Attributen aus einem ID-Token, einen ID-Token und ein Computersystem.

Aus dem Stand der Technik sind verschiedene Verfahren zur Verwaltung der so genannten digitalen Identität eines Benutzers bekannt:
Microsoft Windows CardSpace ist ein Client-basiertes digitales Identitätssystem, welches es Internetbenutzern ermöglichen soll, deren digitale Identität gegenüber Online-Diensten mitzuteilen. Nachteilig ist hierbei unter anderem, dass der Nutzer seine digitale Identität manipulieren kann.

Bei OPENID handelt es sich dagegen um ein Server-basiertes System. Ein so genannter Identity-Server speichert eine Datenbank mit den digitalen Identitäten der registrierten Nutzer. Nachteilig ist hieran unter anderem ein mangelhafter Datenschutz, da die digitalen Identitäten der Nutzer zentral gespeichert werden und das Nutzerverhalten aufgezeichnet werden kann.

Aus US 2007/0294431 A1 ist ein weiteres Verfahren zur Verwaltung der digitalen Identitäten bekannt, welches ebenfalls eine Nutzerregistrierung erfordert.

Aus DE 10 2008 000 067 A1 ist ein Verfahren zum Lesen von zumindest einem Attribut aus einem ID-Token bekannt, von dem die vorliegende Erfindung als dem nächstkommenden Stand der Technik ausgeht. Weiterbildungen dieses Verfahrens sind in den Patentanmeldungen DE 10 2008 040 416, DE 10 2008 042 262, DE 10 2009 026 953, DE 10 2009 027 723, DE 10 2009 027 681 und DE 10 2010 028133 offenbart.

Der Erfindung liegt demgegenüber die Aufgabe zugrunde, ein verbessertes Verfahren zum Lesen von Attributen aus einem ID-Token zu schaffen einen entsprechenden ID-Token, ein entsprechendes Attribut-Provider-Verzeichnis-Computersystem, ein entsprechendes Attribut-Provider-Computersystem, ein entsprechendes Nutzer-Computersystem und Computersystem.

Die der Erfindung zugrunde liegenden Aufgaben werden jeweils mit den Merkmalen der unabhängigen Patentansprüche gelöst. Ausführungsformen der Erfindung sind in den abhängigen Ansprüchen angegeben. Ausführungsformen der Erfindung sind frei miteinander kombinierbar sofern sie sich nicht gegenseitig ausschließen.

Unter einem "ID-Token" wird hier insbesondere ein tragbares elektronisches Gerät verstanden, welches zumindest einen geschützten elektronischen Datenspeicher zur Speicherung der Attribute und eine Kommunikations-Schnittstelle zum Auslesen der Attribute aufweist. Der Speicherbereich ist geschützt, um zu verhindern, dass das in dem Speicherbereich gespeicherte Attribut in unerlaubter Weise verändert oder ohne die dafür erforderliche Berechtigung ausgelesen wird. Mit anderen Worten kann auf den Speicherbereich nur dann zugegriffen werden, wenn eine hierzu erforderliche Zugriffberechtigung gegeben ist.

Insbesondere kann es sich bei dem ID-Token um einen USB-Stick handeln oder ein Dokument, insbesondere ein Wert- oder Sicherheitsdokument. Unter einem "Dokument" werden erfindungsgemäß papierbasierte und/oder kunststoffbasierte Dokumente verstanden, wie zum Beispiel elektronische Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Banknoten, Bankkarten und Kreditkarten, Frachtbriefe oder sonstige Berechtigungsnachweise, in die ein Datenspeicher zur Speicherung des zumindest einen Attributs integriert ist.

Bei dem ID-Token kann es sich um einen Hardwaretoken handeln oder um einen Softtoken, wenn dieser kryptografisch an einen Hardwaretoken, das heißt beispielsweise an ein sogenanntes Secure Element, gebunden ist.

Insbesondere kann ein solcher kryptografisch an ein Secure Element gebundener Softtoken gemäß DE 10 2011 082 101, deren Offenbarungsgehalt voll umfänglich zum Offenbarungsgehalt der vorliegenden Patentanmeldung gemacht wird, erzeugt werden.

Unter einem "ID-Provider-Modul" wird hier ein Programmlogik-Modul verstanden, welches dazu ausgebildet ist, Attribute aus dem ID-Token eines Nutzers auszulesen und eine Attributspezifikation in den ID-Token zu schreiben. Das ID-Provider-Modul kann z.B. als Softwarekomponente aber auch als Computersystem ausgebildet sein. Das ID-Provider-Modul kann z.B. als ID-Provider-Computersystem ausgebildet sein welches vorzugsweise in einem sogenannten Trustcenter betrieben wird, um ein möglichst hohes Maß an Sicherheit zu schaffen. In manchen Ausführungsformen gehören das ID-Provider-Modul und das Dienst-Computersystem zur gleichen IT-Infrastruktur, z.B. zum gleichen Intranet einer Firma. Es ist sogar möglich, dass das ID-Provider-Modul auf dem Dienst-Computersystem installiert und ausgeführt wird, sodass es sich in diesem Fall bei dem ID-Provider-Modul und dem Dienst-Computersystem, bzw. dem auf diesem betriebenen elektronischen Dienst in diesem Fall dann um funktional unterschiedliche, miteinander interoperierende Module handelt. Ein ID-Provider-Modul verfügt z.B. über spezifische Berechtigungsnachweise, z.B. Zertifikate oder kryptographische Schlüssel oder dergleichen, die dem ID-Provider-Modul einen Zugriff auf bestimmte ausgewählte Speicherbereiche eines ID-Tokens erlauben.

Unter einem "Attribut-Provider-Computersystem" oder "AP-Computersystem" wird hier ein Computersystem verstanden, welches dazu ausgebildet ist, Attribute auf Antrage bereitzustellen. Insbesondere kann die Bereitstellung attributklassenspezifisch und/oder spezifisch für einen bestimmten Nutzer eines ID-Tokens erfolgen. Vorzugsweise ist ein Attribut-Provider-Computersystem dazu ausgebildet, eine Attributspezifikation aus dem ID-Token eines Nutzers auszulesen und Attribute in den ID-Token zu schreiben.

Unter einem "Attribut-Provider-Verzeichnis-Computersystem" oder "APV-Computersystem" wird hier ein Computersystem verstanden, welches dazu ausgebildet ist, für bestimmte Klassen von Attributen ein oder mehrere Attribut-Provider-Computersysteme zu identifizieren, welche in der Lage sind, Attribute dieser Klassen vollständig oder zumindest teilweise bereitzustellen. Nach manchen Ausführungsformen können neben der Identität der Attribut-Provider-Computersysteme selbst auch noch weitere Informationen wie z.B. eine Kontaktadresse, Leistungsdaten, historische Verfügbarkeitsdaten bezüglich der jeweiligen Attribut-Provider-Computersysteme identifiziert und an das anfragende System kommuniziert werden.

Bei den Attributklassen kann es sich um (beliebig) vordefinierte Gruppen von Attributen handeln. Die Klassen können disjunkt oder überlappend sein. Beispiele für verschiedene Attributklassen sind: Adressdaten eines Nutzers; medizinische Daten eines Nutzers; Bankdaten eines Nutzers; Informationen, die über die Kreditwürdigkeit eines Nutzers Auskunft geben; und andere.

Unter einem "Attribut" werden hier insbesondere Daten verstanden, die den Nutzer des ID-Tokens oder den ID-Token selbst betreffen, insbesondere Personalisierungsdaten, wie zum Beispiel persönliche Daten des Nutzers, eine Gültigkeitsdauer oder den Herausgeber des ID-Tokens oder eine Zahlungsinformation, wie zum Beispiel Kreditkartendaten oder andere Daten für ein elektronisches Bezahlsystem.

Unter einer "Attributspezifikation" wird hier eine Beschreibung von denjenigen Attributen verstanden, die zum Beispiel von einem Dienst-Computersystem zur Erbringung eines Dienstes benötigt werden. Die Attribute können über Feldnamen von Datenfeldern identifiziert werden, in denen die jeweiligen Attributwerte gespeichert sind, und/oder über ein semantisches Netz, d.h. eine Konvention, wie Attribute systemübergreifend bezeichnet werden.

Unter einem "Dienst-Computersystem" wird hier ein Computersystem verstanden, welches über eine Netzwerk-Schnittstelle zur Verbindung mit dem Netzwerk verfügt, sodass mithilfe eines Internetbrowsers oder eines anderen Anwendungsprogramms auf von dem Dienst-Computersystem gespeicherte oder generierte Internetseiten zugegriffen werden kann. Insbesondere kann es sich bei dem Dienst-Computersystem um einen Internetserver zur Verfügungstellung einer eCommerce- oder eGovernment-Anwendung handeln, insbesondere einen Onlineshop oder einen Behördenserver.

Unter einem "Nutzer-Computersystem" wird hier ein Computersystem verstanden, auf welches der Nutzer Zugriff hat. Hierbei kann es sich zum Beispiel um einen Personal Computer (PC), ein Tablet-PC oder ein Mobilfunkgerät, insbesondere ein Smartphone, mit einem üblichen Internetbrowser, wie zum Beispiel Microsoft Internet Explorer, Safari, Google Chrome, Firefox oder einem anderen Anwendungsprogramm zum Zugriff auf das Dienst-Computersystem handeln. Das Nutzer-Computersystem hat eine Schnittstelle zur Verbindung mit dem Netzwerk, wobei es sich bei dem Netzwerk um ein privates oder öffentliches Netzwerk handeln kann, insbesondere das Internet. Je nach Ausführungsform kann diese Verbindung auch über ein Mobilfunknetz hergestellt werden.

Unter einem "Lesegerät" wird hier ein elektronisches Gerät verstanden, welches einen Lesezugriff und auch einen Schreibzugriff auf den ID-Token ermöglicht, insbesondere ein sogenanntes Chipkartenterminal. Das Lesegerät kann einen integralen Bestandteil des Nutzer-Computersystems bilden oder als separate Komponente ausgeführt sein, beispielsweise als Peripheriegerät des Nutzer-Computersystems. Insbesondere kann es sich bei dem Lesegerät um ein sogenanntes Klasse 1, 2 oder 3 Chipkartenlesegerät handeln.

Unter einem "nichtflüchtigen elektronischen Speicher" wird hier ein Speicher zur Speicherung von Daten, insbesondere von Attributen, verstanden, der auch als Non-Volatile Memory (NVM) bezeichnet wird. Insbesondere kann es sich hierbei um ein EEPROM, beispielsweise ein Flash-EEPROM, kurz als Flash bezeichnet, handeln.

Unter einem "geschützten Speicherbereich" wird hier ein Bereich eines elektronischen Speichers verstanden, auf den ein Zugriff, das heißt ein Lesezugriff oder ein Schreibzugriff, von einem mit dem Speicher gekoppelten Prozessor nur dann ermöglicht wird, wenn eine hierzu erforderliche Bedingung erfüllt ist. Hierbei kann es sich zum Beispiel um eine kryptografische Bedingung, insbesondere eine erfolgreiche Authentisierung und/oder eine erfolgreiche Berechtigungsprüfung, handeln.

Unter einem "Prozessor" wird hier eine Logikschaltung verstanden, die zur Ausführung von Programminstruktionen dient. Die Logikschaltung kann auf einem oder mehreren diskreten Bauelementen implementiert sein, insbesondere auf einem Chip.

Unter einem "Zertifikat" wird hier ein digitales Zertifikat verstanden, welches auch als Public-Key-Zertifikat bezeichnet wird. Bei einem Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Alternativ sind auch Zertifikate basierend auf zero-knowledge Kryptosystemen möglich. Beispielsweise kann das Zertifikat dem Standard X.509 oder einem anderen Standard entsprechen. Beispielsweise handelt es sich bei dem Zertifikat um ein Card Verifiable Certificate (CVC).

In dem Zertifikat kann spezifiziert sein, für welches Attribut oder welche Attribute des Nutzers, die in dem geschützten Speicherbereich des ID-Tokens gespeichert sind, das ID-Provider-Modul bzw. das Attribut-Provider-Computersystem zur Durchführung des Lesezugriffs berechtigt ist. Ferner können auch die jeweiligen Schreibrechte für Attributspezifikationen oder Attribute in einen Zertifikat definiert sein. Ein solches Zertifikat wird auch als Berechtigungszertifikat bezeichnet. Das Berechtigungszertifikat kann als CVC Zertifikat (card verifiable certificate) ausgebildet sein.

Unter einem "gesicherten", "geschützten" oder "sicheren" "Kommunikationskanal" wird hier ein Kommunikationskanal verstanden, der kryptografisch abgesichert ist, um ein Ausspähen und/oder eine Manipulation der Übertragung zu verhindern, wobei hierzu ein sogenanntes Secure-Messaging-Verfahren eingesetzt werden kann.

Beispielsweise kann ein geschützter Kommunikationskanal zwischen einem ID-Token, z.B. einem Chip, und einem entfernten Computer (z.B. Dienst-Computersystem, Attribut-Providersystem) oder einem lokalen Computer (z.B. Nutzer-Computersystem) aufgebaut werden, z.B. mittels eines PACE Protokolls. Geschützte Verbindungen zwischen Computersystemen können z.B. mittels SSL/TLS aufgebaut werden. Unter einem "lokalen" Kommunikationskanal wird hier ein Kommunikationskanal verstanden, der zwischen dem ID-Token und dem Nutzer-Computersystem über das Lesegerät aufgebaut wird, wobei insbesondere die Verbindung zwischen dem ID-Token und dem Lesegerät kontaktbehaftet oder kontaktlos ausgebildet sein kann, letzteres insbesondere gemäß einem NFC- oder RFID-Standard.

Unter Ende-zu-Ende-Verschlüsselung wird hier eine Verschlüsselung übertragener Daten über alle Übertragungsstationen hinweg verstanden. Die zu übertragenden Daten werden auf Senderseite ver- und erst beim Empfänger wieder entschlüsselt. Zwischenstationen können die übertragenen Inhalte nicht entschlüsseln.

In einem Aspekt betrifft die Erfindung ein Verfahren zum Lesen von Attributen aus einem ID-Token. Der ID-Token ist einem Nutzer zugeordnet und weist einen nicht-flüchtigen elektronischen Speicher mit einem geschützten Speicherbereich auf. Ein Zugriff auf den geschützten Speicherbereich ist nur über einen Prozessor des ID-Tokens möglich. Das Verfahren umfasst:
- Senden einer Dienstanforderung eines Nutzers von einem Nutzer-Computersystem an ein Dienst-Computersystem, welches mit einem ID-Provider-Modul gekoppelt ist;
- in Antwort auf den Empfang der Dienstanforderung, Senden einer Attributspezifikation von dem Dienst-Computersystem an das ID-Provider-Modul, wobei die Attributspezifikation diejenigen Attribute spezifiziert, die das Dienst-Computersystem zur Erbringung des mit der Dienstanforderung angeforderten Dienstes benötigt, und gegenseitige Authentifizierung des ID-Provider-Moduls und des ID-Tokens;
- nach erfolgreicher gegenseitiger Authentifizierung von ID-Provider-Modul und des ID-Token, Schreiben der Attributspezifikation in den geschützten Speicherbereich des ID-Tokens durch das ID-Provider-Modul und Senden einer ersten Nachricht, dass die Attributspezifikation geschrieben wurde, von dem Dienst-Computersystem an das Nutzer-Computersystem;

- in Antwort auf den Empfang der ersten Nachricht, Senden eines Triggersignals (T1) von dem Nutzer-Computersystem an ein APV-Computersystem, wobei das APV-Computersystem ein Attribut-Provider-Verzeichnis-Computersystem ist, wobei das Triggersignal frei ist von der Attributspezifikation und von deren Teilen und eine Adresse des ID-Tokens beinhaltet;
- in Antwort auf Empfang des Triggersignals, gegenseitige Authentifizierung des APV-Computersystems und des ID-Tokens unter Verwendung der Adresse;
- nach erfolgreicher gegenseitiger Authentifizierung von APV-Computersystem und des ID-Token, Lesen mehrerer Teil-Attributspezifikationen der Attributspezifikation (AR) aus dem geschützten Speicherbereich des ID-Tokens durch das APV-Computersystem und Identifikation mehrerer AP-Computersysteme welche jeweils ein Attribut-Provider-Computersystem sind welches dazu ausgebildet ist, Attribute einer der Teil-Attributspezifikationen bereitzustellen;
- Senden jede der Teil-Attributspezifikationen von dem APV-Computersystem an dasjenige der identifizierten AP-Computersysteme, welches dazu ausgebildet ist, die in dieser Teil-Attributspezifikation spezifizierten Attribute bereitzustellen;
- in Antwort auf Empfang jeder der Teil-Attributspezifikationen durch das für diese identifizierte AP-Computersystem, Ermittlung einer Menge an Attributen, die in der Teil-Attributspezifikation spezifiziert sind, und Senden der ermittelten Attributmenge von dem AP-Computersystem an das APV-Computersystem;
- Schreiben der Attributmengen durch das APV-Computersystem auf den geschützten Speicherbereich des ID-Tokens;
- Senden eines Terminierungs-Signals (SAPV) von dem APV-Computersystem an das Nutzer-Computersystem nach erfolgreichem Schreiben aller Attributmengen in dem ID-Token;
- In Antwort auf den Empfang des Terminierungs-Signals, Senden einer zweiten Nachricht von dem Nutzer-Computersystem an das Dienst-Computersystem um das Dienst-Computersystem zu veranlassen, die geschriebenen Attributmengen über das ID-Provider-Modul aus dem geschützten Speicherbereich auszulesen.

Dies kann vorteilhaft sein, weil Attribute, die von einer Vielzahl von Attribut Provider Computersystemen bereitgestellt werden, in dem ID-Token auf sichere und vertrauliche Weise gespeichert werden können. Da die Attributmengen nicht von den einzelnen AP-Computersystemen direkt, sondern über das APV-Computersystem in dem Token gespeichert werden, ist es nicht erforderlich, dass zwischen dem ID-Token und den einzelnen AP-Computersystemen spezielle Berechtigungszertifikate oder andere Vertrauensanker ausgemacht werden, da ja keines der AP-Computersysteme direkt auf das Token schreibt. Vielmehr werden die Attribute über einen geschützten Übertragungskanal, der zwischen dem ID-Token und dem APV-Computersystem aufgebaut wird, geschrieben. Dennoch kann die Authentizität der Teil-Attributspezifikationen durch die einzelnen AP-Computersysteme festgestellt werden.

Insbesondere für ID-Token, die selbst nicht über Mittel zur Kontrolle bzw. Durchführung komplexer Kanalumschaltungsprozesse verfügen, ist die Übertragung von Attributen einer Vielzahl von AP-Computersystemen über ein einziges APV-Computersystem bzw. einen einzelnen zentralen geschützten Kommunikationskanal vorteilhaft.

In einem weiteren vorteilhaften Aspekt erhalten der Dienst und die einzelnen AP-Computersysteme keinerlei Kenntnis voneinander und sämtlicher Datenaustausch erfolgt über das Id-Token (und damit gegebenenfalls unter Kontrolle des Tokens bzw. des Nutzers). Dieser Aspekt ist insbesondere vorteilhaft, da somit die einzelnen Attributprovider nicht erfahren und nicht protokollieren können, welche Dienste ein Nutzer in Anspruch nimmt. Beispielsweise kann dadurch verhindert werden, dass mehrere Kreditanfragen bei verschiedenen Bankdienstleistern, für welche personenbezogene Daten des Nutzers an die Bankdienstleister bereitgestellt werden, protokolliert werden und zu einer Herabstufung der Kreditwürdigkeit des Nutzers führen. Ebenso kann verhindert werden, dass ein Attributprovider beispielsweise aus der Art und Frequenz der Nutzung von Gesundheitsdienstleistern Rückschlüsse auf den Gesundheitszustand eines Patienten durchführen kann.

Nach Ausführungsformen initialisiert das ID-Provider-Modul nach erfolgreicher gegenseitiger Authentifizierung von ID-Provider-Modul und ID-Token den Aufbau eines ersten geschützten Kommunikationskanals zwischen dem ID-Provider-Modul und dem ID-Token. Das Schreiben der Attributspezifikation erfolgt über den ersten geschützten Kommunikationskanal. Nach erfolgreicher gegenseitiger Authentifizierung von APV-Computersystem und ID-Token, initialisiert das APV-Computersystem den Aufbau eines zweiten geschützten Kommunikationskanals zwischen dem APV-Computersystem und dem ID-Token durch das APV-Computersystem. Das Lesen der Teil-Attributspezifikationen erfolgt über den zweiten geschützten Kommunikationskanal. Der zweite geschützte Kommunikationskanal wird während der Bereitstellung der Attribute durch die AP-Computersysteme aufrechterhalten. Das Schreiben aller Teil-Attributmengen erfolgt über den bereits aufgebauten und bereits für das Lesen der Teil-Attributspezifikationen verwendeten zweiten geschützten Kommunikationskanal.

Daten, die über den ersten oder zweiten geschützten Kommunikationskanal übertragen werden, sind vor dem Zugriff des Nutzer-Computersystems geschützt. Somit sind die sensiblen persönlichen Attribute vor Schadsoftware, die möglicherweise auf dem Nutzer-Computersystem installiert ist, wirksam geschützt.

Nach Ausführungsformen umfasst der Aufbau des ersten geschützten Kommunikationskanals einen Aufbau oder eine Reaktivierung eines lokalen geschützten Kommunikationskanals zwischen dem Nutzer-Computersystem und dem ID-Token. Der Aufbau umfasst ferner eine Durchführung der gegenseitigen Authentifizierung des Nutzer-Computersystems und ID-Token um den ersten geschützten Kommunikationskanal aufzubauen, wobei Authentifizierungsdaten über den lokalen geschützten Kommunikationskanal übermittelt werden.

Nach Ausführungsformen ist der ID-Token frei von einer software- oder hardwarebasierten Programmlogik, die dazu ausgebildet ist, in Abhängigkeit vom Inhalt des geschützten Speicherbereiches den Aufbau neuer oder die Aktivierung bestehender Kommunikationskanäle zu dem Nutzer-Computersystem, dem ID-Provider-Modul und/oder dem APV-Computersystem zu initiieren.

Nach Ausführungsformen sendet das Nutzer-Computersystem in Antwort auf den Empfang des Terminierungs-Signals (SAPV) ein Umschaltkommando von dem Nutzer-Computersystem an den ID-Token um den ID-Token zu veranlassen, den ersten geschützten Kommunikationskanal zu aktivieren. Das ID-Provider-Modul liest die geschriebenen Teil-Attributmengen aus dem geschützten Speicherbereich über den aktivierten geschützten ersten geschützten Kommunikationskanal aus.

Nach Ausführungsformen umfasst das Verfahren ferner den Aufbau eines lokalen geschützten Kommunikationskanals zur Übermittlung von Authentifizierungsdaten über den lokalen geschützten Kommunikationskanal im Zuge der gegenseitigen Authentifizierung des ID-Tokens und des ID-Provider-Computersystems. Nach erfolgtem Schreiben der Attributspezifikation in dem geschützten Speicherbereich sendet das APV-Computersystem ein Umschaltkommando von dem APV-Computersystem an den ID-Token über den ersten geschützten Kommunikationskanal, wobei das Umschaltkommando den ID-Token dazu veranlasst, einen lokalen geschützten Kommunikationskanal zu re-aktivieren.

Nach Ausführungsformen sendet das Nutzer-Computersystem in Antwort auf den Erhalt des Terminierungs-Signals ein Umschaltkommando über den aktivierten lokalen Kommunikationskanal an das ID-Token. Das Umschaltkommando veranlasst den ID-Token dazu, den ersten geschützten Kommunikationskanal zu aktivieren. Sodann liest das ID-Provider-Modul die geschriebenen Attributmengen aus dem geschützten Speicherbereich über den aktivierten geschützten ersten geschützten Kommunikationskanal aus.

Die Verwendung von Terminierungssignalen und/oder Umschaltkommandos kann vorteilhaft sein, da das Verfahren dadurch auch auf ID-Token durchgeführt werden kann, welche selbst nicht über eine komplexe Kontrolllogik zur Koordination einzelner Kommunikationskanäle zum Datenaustausch mit mehreren Kommunikationspartnern verfügen.

Nach Ausführungsformen löscht das APV-Computersystem nach erfolgtem Schreiben aller Attributmengen in dem geschützten Speicherbereich die Teil-Attributspezifikationen von dem ID-Token oder löscht die einzelnen Teil-Attributspezifikationen, deren jeweilige Attributmengen bereits in das ID-Token gespeichert wurden, einzeln.

Nach Ausführungsformen führt das APV-Computersystem oder das Dienst-Computersystem eine Analyse der Attributspezifikation zur Ermittlung der Teil-Attributspezifikationen durch. Die Teil-Attributspezifikationen stellen klassenspezifisehe Teil-Attributspezifikationen dar, welche jeweils nur Attribute einer bestimmten Klasse spezifizieren. Jedes der AP-Computersysteme ist dazu ausgebildet, Attribute einer oder mehrerer bestimmter Klassen bereitzustellen. Das APV-Computersystem ist dazu ausgebildet, jede der klassenspezifischen Teil-Attributspezifikationen selektiv an dasjenige AP-Computersystem zu senden, das zur Bereitstellung von Attributen der entsprechenden Attributklasse ausgebildet ist.

Nach Ausführungsformen umfasst das Lesen mehrerer Teil-Attributspezifikationen aus dem geschützten Speicherbereich des ID-Tokens:
- Übertragung einer Signaturanfrage von dem APV-Computersystem an das ID-Token;
- In Antwort auf die Signaturanfrage, Erzeugung einer digitalen Signatur jeder der Teil-Attributspezifikationen durch den ID-Token mittels eines in dem ID-Token geschützt gespeicherten privaten Signierschlüssels, im Folgenden als "PrivK_{TO-KEN}" bezeichnet;
- Durchführung des Lesens mehrerer Teil-Attributspezifikationen aus dem geschützten Speicherbereich des ID-Tokens wobei die Teil-Attributspezifikationen als signierte Teil-Attributspezifikationen gelesen werden;
- Prüfung der digitalen Signaturen der gelesenen Teil-Attributspezifikationen durch das APV-Computersystem mit einem öffentlichen Signaturprüfschlüssel, im Folgenden als "PubK_{TOKEN}" bezeichnet, wobei das Senden der Teil-Attributspezifikationen an die identifizierten AP-Computersysteme nur für diejenigen Teil-Attributspezifikationen erfolgt, deren Signaturprüfung ergibt, dass deren digitale Signatur valide ist.

Nach Ausführungsformen werden die Teil-Attributspezifikationen in signierter Form an die identifizierten AP-Computersysteme gesendet. Jedes der identifizierten AP-Computersysteme, die eine der signierten Teil-Attributspezifikationen empfangen haben, prüfen die digitalen Signatur der jeweils empfangenen Teil-Attributspezifikationen mit dem öffentlichen Signaturprüfschlüssel PubK_{TOKEN}. Die Ermittlung der in der Teil-Attributspezifikation spezifizierten Attribute durch das AP-Computersysteme erfolgt nur dann, wenn die Signaturprüfung ergibt, dass die digitale Signatur valide ist.

Dies kann vorteilhaft sein, da dadurch gewährleistet ist, dass die einzelnen AP-Computersysteme persönliche und möglicherweise sensible Daten eines Nutzers (in Form der zu ermittelnden Attribute) nur dann ermitteln und dem APV-Computersystem zur Verfügung stellen, wenn anhand der Signatur zweifelsfrei festgestellt werden kann, dass eine vom APV-Computersystem erhaltene Teil-Attributspezifikation vom Id-Token des Nutzers autorisiert ist, d.h., dass der Nutzer generell oder in Bezug auf eine bestimmte Dienstanforderung der Bereitstellung dieser Attribute zugestimmt hat.

Dies kann insbesondere dann vorteilhaft sein, wenn das AP-Computersystem zur Erstellung der Attribute oder für spätere Nachweise der korrekten Attributerstellung gegenüber Dritten nachweisen muss, dass wirklich eine Anfrage eines ID-Tokens vorliegt oder vorgelegen hat. Damit wird der Situation vorgebeugt, dass ein Attribut-Provider-Computersysteme unberechtigterweise Daten in Form von Attributen sammelt, die nicht von ID-Token erfragt wurden.

Beispielsweise kann die Signaturerstellung durch das ID-Token daran gekoppelt sein, dass eine Signatur-Bestätigungsanfrage generiert wird, die dem Nutzer angezeigt wird, und die der Nutzer bestätigen muss, etwa durch Eingabe einer PIN. Das ID-Token erstellt die Signatur nur nach erfolgter Freigabe durch den Nutzer. Die Freigabe erfolgt vorzugsweise für jede Dienstanforderung und zugehörige Attributspezifikation bzw. Teil-Attributspezifikation einzeln. Dadurch wird sichergestellt, dass ein "betrügerisches" APV-Computersystem nicht autonom eine (Teil-) Attributspezifikation generieren und sensible Daten eines Nutzers ohne dessen Zustimmung abfragen kann.

Nach Ausführungsformen ist die digitale Signatur der Teil-Attributspezifikationen eine pseudonyme Signatur. Der öffentliche Signaturprüfschlüssel PubK_{TOKEN} ist zur Prüfung der von einer Vielzahl an ID-Token erzeugten pseudonymen Signaturen ausgebildet und ist so gespeichert, dass er für jedes der identifizierten AP-Computersystemen und/oder für das APV-Computersystem zugänglich ist. Beispielsweise kann der öffentliche Signaturprüfschlüssel (zur Prüfung einer pseudonymen oder nicht-pseudonymen Signatur) in einem öffentlich über ein Netzwerk zugänglichen und automatisch abfragbaren Verzeichnis für Signaturprüfschlüssel gespeichert sein.

Beispielsweise kann die pseudonyme Signatur gemäß der technischen Richtlinie TR-03110-2 des BSI, Abschnitt 3.1.6, erzeugt werden.
Die Verwendung einer Pseudonymen Signatur kann vorteilhaft sein, da dadurch verhindert wird, dass einzelne AP-Computersysteme eine Anfrage zur Bereitstellung von Attributen (in Form einer empfangenen Teil-Attributspezifikation) einem bestimmten ID-Token und damit einen bestimmten Nutzer zuordnen können. Es wird dadurch verhindert, dass ein Profil von Attributanfragen für ein bestimmtes ID-Token bzw. einen bestimmten Nutzer durch ein AP-Computersystem erstellt wird. Somit wird ein hoher Schutz persönlicher Daten erreicht, sowohl im Hinblick darauf WELCHE Dienste ein Nutzer in Anspruch nimmt (Konnektivität) als auch im Hinblick auf die an den Dienst übertragenen Nutzerdaten.

Nach Ausführungsformen erzeugt das ID-Token ein asymmetrisches kryptographisches Schlüsselpaar. Das Schlüsselpaar umfasst einen privaten Entschlüsselungsschlüssel, im Folgenden auch "PrivK_{DEC}" bezeichnet, und einen öffentlichen Verschlüsselungsschlüssel, im Folgenden als "PubK_{ENC}" bezeichne. Der private Entschlüsselungsschlüssel PrivK_{DEC} is so gespeichert, dass er weder einem der AP-Computersysteme noch dem Nutzer-Computersystem noch dem APV-Computersystem zugänglich ist. Der ID-Token signiert den öffentlichen Verschlüsselungsschlüssel PubK_{ENC} mit seinem privaten Signierschlüssel PrivK_{Token}. Dies kann vorteilhaft sein, da die AP-Computersysteme anhand dieser Signatur prüfen können bzw. darauf vertrauen können, dass der Verschlüsselungsschlüssel PubKENC tatsächlich von einem ID-Token stammt.

Der ID-Token leitet den öffentlichen Verschlüsselungsschlüssel PubK_{ENC} an die identifizierten AP-Computersysteme weiter. Dies kann vorzugsweise über das APV Computersystem erfolgen. Der öffentliche Verschlüsselungsschlüssel kann zusammen mit den jeweiligen Teil-Attributspezifikationen an das für die jeweilige Attributspezifikation identifizierte AP-Computersystem weitergeleitet werden. Daraufhin prüft jedes der identifizierten AP-Computersysteme die Signatur des öffentlichen Verschlüsselungsschlüssels PubK_{ENC} mittels des öffentlichen Signaturprüfschlüssels PubK_{TOKEN} des ID Tokens und verschlüsselt die durch dieses ermittelte Attributmenge mittels des öffentlichen Verschlüsselungsschlüssels PubK_{ENC}. Jedes der AP-Computersysteme führt die Ermittlung und Bereitstellung der Attribute jedoch nur dann durch, wenn die Signatur des öffentlichen Signaturprüfschlüssels (PubK_{TOKEN}) valide ist. Das APV-Computersystem empfängt die ermittelten Attributmengen in verschlüsselter Form von den identifizierten AP-Computersystemen und schreibt diese in verschlüsselter Form in den geschützten Speicher des ID-Tokens. Das ID-Token entschlüsselt die verschlüsselten Attributmengen mittels des privaten Entschlüsselungsschlüssel PrivK_{DEC} und speichert die Attributmengen in unverschlüsselter Form erneut in dem geschützten Speicherbereich des ID-Tokens. Optional kann dabei die verschlüsselte Form der Attributmengen vom Token gelöscht werden.

Dies kann vorteilhaft sein, da durch die Verschlüsselung die Vertraulichkeit der Attribute, die mittels des APV-Computersystems an das Id-Token übermittelt werden, vor dem übermittelnden APV-Computersystem gewahrt bleibt. Somit erhält das APV-Computersystem zur Kenntnis über die Art der angefragten persönlichen Daten eines Nutzers, nicht jedoch über die persönlichen Daten selbst. Es verfügt nicht über den geheimen Schlüssel um die übertragenen Attributmengen zu entschlüsseln.

Nach Ausführungsformen wird das asymmetrische kryptographische Schlüsselpaar, das den privaten Entschlüsselungsschlüssel PrivK_{DEC} und den öffentlichen Verschlüsselungsschlüssel PubK_{ENC} beinhaltet, temporär erzeug. Vorzugsweise ist die Lebensdauer des Schlüsselpaars beschränkt auf die Zeit bis zur Durchführung des angeforderten Dienstes oder auf die Lebensdauer des zweiten Kommunikationskanals.

Dies kann vorteilhaft sein, da die Konnektivität zwischen Token und Diensten nicht verfolgbar ist. Ein "Tracking" der angeforderten Dienste bzw. der bereitgestellten Attribute durch das APV-Computersystem ist nicht möglich. Somit wird ein hoher Schutz persönlicher Daten gewährleistet.
Nach Ausführungsformen ist die Lebensdauer des Ver- und Entschlüsselungs-Schlüsselpaars dadurch technisch an die Lebensdauer des zweiten Kommunikationskanals gebunden, dass das APV-CS, ausschließlich nach erfolgreichem Aufbau des zweiten geschützten Kommunikationskanals SM[CA]#2, einen entsprechenden Satz an Befehlen selbst zum Token sendet und eine entsprechende Menge an Operationen selbst durchführt. Dieser Satz an Befehlen und die Menge an Operationen beinhaltet:
- einen Befehl zum Erzeugen des Schlüsselpaares (PrivK_{DEC},PubK_{ENC})
- einen Befehl zum Signieren von PubK_{ENC} mit PrivK_{TOKEN},
- die Operation des Auslesens von PubK_{ENC} einschließlich der Signatur,
- die Operation des Weiterleitens der ausgelesenen Teil-Attributspezifikationen an die AP-Computersysteme;

Zudem ist das APV-Computersystem dazu konfiguriert, noch vor der Terminierung des zweiten geschützten Kommunikationskanals (SM[CA]#2), einen weiteren Satz an Befehlen selbst zum Token zu senden, wobei der weitere Satz an Befehlen beinhaltet:
- einen Befehl zum Entschlüsseln der verschlüsselt im Token abgelegten Attribute,
- einen Befehl zum Löschen des Schlüsselpaares (PrivK_{DEC}, PubK_{ENC}).

Das ID-Token kann nach Ausführungsformen ferner so konfiguriert sein, dass es die Ver- und Entschlüsselungsschlüssel autonom löscht, sobald der zweite geschützte Kommunikationskanal SM[CA]#2 (und damit der Sicherheitskontext) terminiert wurde oder gerade terminiert wird.

Nach Ausführungsformen erzeugt das ID-Token ferner eine Aufforderungsmeldung an den Nutzer zur Eingabe einer Signatur-PIN für die Freischaltung einer Signaturfunktion des ID-Tokens für die Erzeugung einer digitalen Signatur der Teil-Attributspezifikationen.

Nach Ausführungsformen erstellt der ID-Token Signaturen über Attributspezifikationen nur dann, wenn der Nutzer dieser Signatur durch eine PIN-Eingabe zugestimmt hat. In diesem Fall fordert das Lesegerät oder das Nutzer-Computersystem den Nutzer zur Eingabe einer Signatur-PIN für die Freischaltung einer Signaturfunktion des ID-Tokens für die Erzeugung einer digitalen Signatur einer bestimmten Teil-Attributspezifikation oder (vorzugsweise) sämtlicher Teil-Attributspezifikationen auf. Die Aufforderung zur PIN-Eingabe ("Signaturbestätigungsanfrage") wird von dem APV-Computersystem (vorzugsweise pauschal für alle Teil-Attributspezifikationen) an das Nutzer-Computersystem versendet, das an entsprechende Eingabemittel gekoppelt ist. Auch für den Fall dass eigentlich nur eines der AP-Computersysteme eine Signierung seiner Teil-Attributspezifikation erwartet bzw. erfordert kann es vorteilhaft sein, pauschal alle Teil-Attributspezifikationen durch das ID-Token zu signieren, da AP-Computersysteme, die keine Signatur benötigen, die "zuviel vorhandene" Signatur nicht prüfen müssen. Die eingegebene PIN selbst wird vom Nutzer-CS zum APV-Computersystem und von dort über den geschützten Kommunikationskanal SM[CA]#2 an den ID-Token übermittelt. Generell kommuniziert das APV-Computersystem über den SM[CA]#2 nicht nur Signaturanfragen mit dem ID-Token, sondern auch die Kommandos zum Auslesen der Attributspezifikationen, ggf. zum Übermitteln der PIN, zum Auslesen der Signaturen, sowie zum Schreiben der Attribute.

Da nicht die AP-Computersysteme, sondern das APV-Computersystem die Anforderung zur PIN-Eingabe sendet, muss den AP-Computersystemen die Adresse (und Identität) des ID-Tokens nicht preisgegeben werden.

Die oben beschriebene PIN-Eingabe ist jedoch nur in manchen Ausführungsformen implementiert. Ausführungsformen ohne eine PIN-Eingabe, insbesondere wenn sie eine pseudonyme Signatur ohne PIN Eingabe implementieren, haben den Vorteil der garantierten Anonymität des Nutzers bzw. seines Tokens.

Somit kann sichergestellt werden, dass der Nutzer die Kontrolle darüber behält, ob und gegebenenfalls welche Art von persönlichen Daten über das APV-Computersystem von den mehreren AP-Computersystemen abgefragt werden sollen.

Nach Ausführungsformen erfolgt die Authentifizierung des ID-Provider-Moduls gegenüber dem ID-Token mithilfe eines Berechtigungszertifikats des ID-Provider-Moduls, in dem Leserechte des ID-Provider-Moduls zum Lesen der Attributmengen aus dem ID-Token spezifiziert sind. Der ID-Token führt für die Lesezugriffe des ID-Provider-Moduls eine Prüfung der Leseberechtigung des ID-Provider-Moduls mithilfe des Berechtigungszertifikats durch. In dem Berechtigungszertifikat sind Schreibrechte des ID-Provider-Moduls zum Schreiben der Attributspezifikation und/oder der Teil-Attributspezifikationen in dem ID-Token spezifiziert. Der ID-Token führt in Antwort auf einen Versuch eines Schreibzugriffs des ID-Provider-Moduls eine Prüfung der Schreibberechtigung des ID-Provider-Moduls mithilfe des Berechtigungszertifikats durch.

Nach Ausführungsformen erfolgt die Authentifizierung des APV-Computersystems gegenüber dem ID-Token mithilfe eines Berechtigungszertifikats des APV-Computersystems. In dem Berechtigungszertifikat sind Leserechte zum Lesen der Teil-Attributspezifikationen spezifiziert. Zusätzlich oder alternativ dazu sind in dem Berechtigungszertifikat Schreibrechte des APV-Computersystems zum Schreiben der Attributmengen in dem ID-Token spezifiziert. Der ID-Token führt eine Prüfung der Schreibberechtigung des APV-Computersystems mithilfe des Berechtigungszertifikats durch bevor der ID-Token dem APV-Computersystem das Schreiben der Attributmengen genehmigt. Zusätzlich oder alternativ dazu führt der ID-Token eine Prüfung der Leseberechtigung des APV-Computersystems mithilfe des Berechtigungszertifikats durch bevor der ID-Token dem APV-Computersystem das Lesen der Teil-Attributspezifikationen genehmigt.

Nach Ausführungsformen enthält der geschützte Speicherbereich des ID-Token mehrere Unterbereiche. Jeder der Unterbereich ist spezifisch einer Attributklasse zugeordnet. Der ID-Token ermöglicht einen lesenden und/oder schreibenden Zugriff des APV-Computersystems auf einen der Unterbereiche nur dann, wenn das Berechtigungszertifikat des APV-Computersystems einen Nachweis einer Lese- und/oder Schreibberechtigung für diesen Unterbereich beinhaltet. Das Berechtigungszertifikat des APV-Computersystems räumt dem APV-Computersystem eine Berechtigung zum Schreiben einer Attributmenge und/oder zum Lesen einer Teil-Attributspezifikation nur bezüglich demjenigen Unterbereich ein, welchem diejenige Attributklasse zugewiesen ist, zu deren Bereitstellung das APV-Computersystem ausgebildet ist.

Die Aufteilung des geschützten Speicherbereichs in mehrere Unterbereiche und eine getrennte Verwaltung und Kontrolle entsprechender Zugriffsrechte kann vorteilhaft sein, da die in dem Id-Token gespeicherten personenbezogenen Daten dadurch noch besser vor unberechtigten Zugriff geschützt werden.

Nach Ausführungsformen erfolgt somit auch die Prüfung von Lese- und Schreibrechten attributklassenspezifisch. Jeder ermittelten Attributklasse kann z.B. ein Bereich, auch "Sektor" genannt, auf dem geschützten Speicherbereich des ID-Tokens zugewiesen sein. Das Berechtigungszertifikat kann das APV-Computersystem beispielsweise selektiv zum Schreiben von Attributen einer bestimmten Attributklasse auf einen bestimmten, attributklassenspezifischen Sektor des Speicherbereichs des ID-Tokens berechtigen, wohingegen die Attribute einer anderen Klasse in einem anderen Sektor gespeichert werden, auf welchen das APV-Computersystem nicht zugreifen kann. Typischerweise besitzt jedoch das APV eine Berechtigung zum Lesen von Teil-Attributspezifikationen mehrerer Klassen und/oder zum Schreiben von Attributmengen mehrerer verschiedener Klassen.

Nach Ausführungsformen weist das Berechtigungszertifikat des APV-Computersystems dem APV-Computersystem weder eine Berechtigung zum Lesen der Attributmengen von noch zum Schreiben von Attributspezifikationen in dem geschützten Speicherbereich des ID-Tokens zu.

Der ID-Token kann beispielsweise ein Wert- oder Sicherheitsdokument sein, z.B. ein Ausweisdokument, das heißt ein ID-Dokument, insbesondere ein elektronischer Personalausweis, Reisepass, Führerschein, Firmenausweis oder ein Zahlungsmittel, wie zum Beispiel eine Banknote, eine Kreditkarte oder einen sonstigen Berechtigungsnachweis, wie zum Beispiel eine Eintrittskarte, einen Frachtbrief oder ein Visum, insbesondere eine Chipkarte, insbesondere mit RFID- und/oder NFC-Schnittstelle.

In einem weiteren Aspekt betrifft die Erfindung ein ID-Token, der einem Nutzer zugeordnet ist. Der ID-Token weist einen elektronischen Speicher mit einem geschützten Speicherbereich auf, wobei ein Zugriff auf den geschützten Speicherbereich nur über einen Prozessor des ID-Tokens möglich ist. Der ID-Token beinhalet eine Kommunikationsschnittstelle zur Kommunikation mit einem Lesegerät eines Nutzer-Computersystems. Das Nutzer-Computersystem ist an ein ID-Provider-Modul über ein Netzwerk gekoppelt. Der ID-Token ist zur Durchführung der folgenden Schritte konfiguriert:
- gegenseitige Authentifizierung des ID-Provider-Moduls und des ID-Tokens;
- nach erfolgreicher gegenseitige Authentifizierung des ID-Provider-Moduls und des ID-Tokens, Empfang einer Attributspezifikation von dem ID-Provider-Modul und Speichern der empfangenen Attributspezifikation und/oder von Teil-Attributspezifikationen der empfangenen Attributspezifikation in den geschützten Speicherbereich des ID-Tokens, wobei die Attributspezifikation diejenigen Attribute spezifiziert, die das Dienst-Computersystem zur Erbringung eines von dem Nutzer angeforderten Dienstes benötigt;
- gegenseitige Authentifizierung eines APV-Computersystems und des ID-Tokens;
- nach gegenseitiger Authentifizierung des APV-Computersystems und des ID-Tokens, Prüfung eines APV-Computersystem-spezifischen Berechtigungszertifikats in Antwort auf eine Leseanfrage um festzustellen, ob das APV-Computersystem zum Lesen von Teil-Attributspezifikationen der Attributspezifikation von dem geschützten Speicherbereich berechtigt ist, wobei das APV-Computersystem ein Attributprovider-Verzeichnis-Computersystem ist;
- falls das APV-Computersystem zum Lesen der Teil-Attributspezifikationen berechtigt ist, Erlaubnis des Lesezugriffs zum Auslesen der Teil-Attributspezifikationen durch das APV-Computersystem;
- nach gegenseitiger Authentifizierung des APV-Computersystems und des ID-Tokens, Prüfung eines APV-Computersystem-spezifischen Berechtigungszertifikats in Antwort auf eine Schreibanfrage um festzustellen, ob das APV-Computersystem zum Schreiben von Attributmengen, welche jeweils in einer der Teil-Attributspezifikationen spezifiziert wurden, in den geschützten Speicherbereich berechtigt ist;
- falls das APV-Computersystem zum Schreiben der Attributmengen berechtigt ist, Erlaubnis des Schreibzugriffs zum Schreiben der Attributmengen durch das APV-Computersystem.

Der ID-Token ist dazu ausgebildet, im Falle einer erfolgreichen gegenseitige Authentifizierung des ID-Provider-Moduls und des ID-Tokens einen ersten geschützten Kommunikationskanal mit Ende-zu-Ende-Verschlüsselung zwischen dem ID-Token und dem ID-Provider-Modul über das Netzwerk aufzubauen. Der ID-Token ist ferner dazu ausgebildet, im Falle einer erfolgreichen gegenseitige Authentifizierung des APV-Computersystems und des ID-Tokens einen zweiten geschützten Kommunikationskanal mit Ende-zu-Ende-Verschlüsselung zwischen dem ID-Token und dem APV-Computersystem über das Netzwerk aufzubauen.

Nach Ausführungsformen ist das ID-Token dazu ausgebildet, im Zuge des Lesens mehrerer Teil-Attributspezifikationen aus dem geschützten Speicherbereich des ID-Tokens ein Verfahren auszuführen welches folgende Schritte beinhaltet:
- Empfang einer Signaturanfrage von dem APV-Computersystem;
- In Antwort auf die Signaturanfrage, Erzeugung einer digitalen Signatur jeder der Teil-Attributspezifikationen mittels eines in dem ID-Token geschützt gespeicherten privaten Signierschlüssels "PrivKTOKEN";
- Ermöglichung des Lesens mehrerer Teil-Attributspezifikationen aus dem geschützten Speicherbereich des ID-Tokens, wobei die Teil-Attributspezifikationen als signierte Teil-Attributspezifikationen gelesen werden, wobei das APV-Computersystem Zugriff auf einen öffentlichen Signaturprüfschlüssel "PubK_{TOKEN}" hat, welcher mit dem privaten Signierschlüssel ein asymmetrisches kryptographisches Schlüsselpaar bildet, wobei der öffentliche Signaturprüfschlüssel dem AVP-Computersystem die Prüfung der digitalen Signaturen der gelesenen Teil-Attributspezifikationen ermöglicht.

Nach Ausführungsformen ist in dem geschützten Speicherbereich des ID-Tokens ein einziger privater Signierschlüssel zur Signatur sämtlicher Teil-Attributspezifikationen für die Vielzahl der AP-Computersysteme gespeichert. Jedes der AP -Computersysteme hat Zugriff auf einen öffentlichen Signaturprüfschlüssel, welcher mit diesem privaten Signierschlüssel ein asymmetrisches kryptographisches Schlüsselpaar bildet. Der Signaturprüfschlüssel kann z.B. in einem öffentlichen Schlüsselverzeichnis so gespeichert sein, dass er von den AP-Computersystemen über das Internet abgerufen werden kann. Der öffentliche Signaturprüfschlüssel ist dazu ausgebildet, eine von dem privaten Signierschlüssel generierte digitale Signatur auf deren Validität hin zu überprüfen.

Nach Ausführungsformen ist die digitale Signatur der Teil-Attributspezifikationen eine pseudonyme Signatur. Der öffentliche Signaturprüfschlüssel PubK_{TOKEN} ist zur Prüfung der von einer Vielzahl an ID-Token erzeugten pseudonymen Signaturen ausgebildet. Der öffentliche Signaturprüfschlüssel ist so gespeichert dass er für mehrere AP-Computersysteme, die die Attributmengen über das APV Computersystem bereitstellen und/oder für das APV-Computersystem zugänglich ist.

Nach Ausführungsformen ist das ID-Token ferner zur Durchführung eines Verfahrens ausgebildet, welches umfasst:
- Erzeugung eines asymmetrischen kryptographischen Schlüsselpaares, wobei das Schlüsselpaar einen privaten Entschlüsselungsschlüssel "PrivK_{DEC}" und einen öffentlichen Verschlüsselungsschlüssel "PubK_{ENC}" umfasst, wobei der private Entschlüsselungsschlüssel "PrivK_{DEC}" weder einem einer Vielzahl von AP-Computersystemen, die die Attributmengen über das APV-Computersystem bereitstellen, noch dem Nutzer-Computersystem noch dem APV-Computersystem zugänglich ist;
- Signatur des öffentlichen Verschlüsselungsschlüssel PubK_{ENC} mit dem privaten Signierschlüssel PrivK_{Token}
- Auslesen des öffentlichen Verschlüsselungsschlüssels PubK_{ENC} und der Signatur des öffentlichen Verschlüsselungsschlüssel PubK_{ENC} durch das APV-Computersystem;
- Übermittlung des öffentlichen Verschlüsselungsschlüssels "PubK_{ENC}" (ggf. zusammen mit den jeweiligen Teil-Attributspezifikationen]) an das APV-Computersystem zur Weiterleitung an die AP-Computersysteme;
- Weiterleitung der Signatur des öffentlichen Verschlüsselungsschlüssels (PubK_{ENC}) an die identifizierten AP-Computersysteme;
- Wobei der Schreibzugriff zum Schreiben der Attributmengen durch das APV-Computersystem so erfolgt dass die Attributmenge in verschlüsselter Form in dem geschützten Speicherbereich des ID-Tokens gespeichert werden, wobei die Verschlüsselung jeder der Attributmengen mittels des öffentlichen Verschlüsselungsschlüssels "PubK_{ENC}" durch das diese bereitstellende AP-Computersystem erfolgt; und
- Entschlüsselung der verschlüsselten Attributmengen mittels des privaten Entschlüsselungsschlüssel "PrivK_{DEC}" und erneute Speicherung der Attributmengen in unverschlüsselter Form in dem geschützten Speicherbereich des ID-Tokens.

Nach Ausführungsformen wird das asymmetrische kryptographische Schlüsselpaar, das den privaten Entschlüsselungsschlüssel und den öffentlichen Verschlüsselungsschlüssel beinhaltet, temporär erzeugt, wobei vorzugsweise die Lebensdauer des Schlüsselpaars beschränkt ist auf die Zeit bis zur Durchführung des angeforderten Dienstes oder beschränkt ist auf die Lebensdauer des zweiten Kommunikationskanals.

In einem weiteren Aspekt betrifft die Erfindung ein APV-Computersystem, das über ein Netzwerk mit einem Nutzer-Computersystem und mehreren AP-Computersystemen verbunden ist. Jedes der AP-Computersysteme ist ein Attributprovider-Computersystem, welches dazu ausgebildet ist, nutzerbezogene Attribute bereitzustellen. Das Nutzer-Computersystem ist über ein Lesegerät an einen ID-Token gekoppelt, der einen nichtflüchtigen elektronischen Speicher mit einem geschützten Speicherbereich aufweist. Ein Zugriff auf den geschützten Speicherbereich ist nur über einen Prozessor des ID-Tokens möglich. Das APV-Computersystem ist ein Attribut-Provider-Verzeichnis-Computersystem und ist konfiguriert zum:
- Empfang eines Triggersignals von dem Nutzer-Computersystem, wobei das Triggersignal frei ist von einer Attributspezifikation derjenigen Attribute, die ein von dem Nutzer angeforderter Dienst für seine Erbringung erfordert, wobei das Triggersignal eine Adresse des ID-Tokens beinhaltet, wobei die Attributspezifikation nutzerbezogene Attribute spezifiziert, die ein von einem Nutzer des Nutzer-Computersystems angeforderter Dienst zu seiner Erbringung benötigt;
- in Antwort auf Empfang des Triggersignals, gegenseitige Authentifizierung des APV-Computersystems und des ID-Tokens unter Verwendung der Adresse;
- nach erfolgreicher gegenseitiger Authentifizierung von APV-Computersystem und des ID-Token, Lesen von Teil-Attributspezifikationen der Attributspezifikation aus dem geschützten Speicherbereich des ID-Tokens;
- Identifikation mehrerer AP-Computersysteme welche dazu ausgebildet sind, Attribute zumindest einer der Teil-Attributspezifikationen bereitzustellen;
- Senden jede der Teil-Attributspezifikationen an dasjenige der identifizierten AP-Computersysteme, welches dazu ausgebildet ist, die in dieser Teil-Attributspezifikation spezifizierten Attribute bereitzustellen;
- Empfang, von jedem der AP-Computersysteme, einer Menge an von dem AP-Computersystem ermittelten Attributen, die in der an dieses AP-Computersystem gesendeten Teil-Attributspezifikation spezifiziert sind;
- Schreiben der Attributmengen auf den geschützten Speicherbereich des ID-Tokens;
- Senden eines Terminierungs-Signals an das Nutzer-Computersystem um das erfolgreiche Schreiben aller empfangenen Attributmengen anzuzeigen.

In einem weiteren Aspekt betrifft die Erfindung ein Computersystem zur Bereitstellung von Attributen. Das Computersystem umfasst:
- ein ID-Token nach einer der hier beschriebenen Ausführungsformen;
- ein APV-Computersystem nach einer der hier beschriebenen Ausführungsformen;
- mehrere AP-Computersysteme;
- ein Nutzer-Computersystem, das über ein Lesegerät an den ID-Token und über ein Netzwerk an ein Dienst-Computersystem und zumindest an das APV-Computersystem gekoppelt ist; und
- ein ID-Provider-Modul, wobei das ID-Provider-Modul Bestandteil des Dienst-Computersystems ist oder an das Dienst-Computersystem über ein Netzwerk operativ gekoppelt ist.

Nach Ausführungsformen beinhaltet das Verfahren:
- Speicherung der kryptographischen Schlüssel, die zum Aufbau eines jeden der geschützten Kanäle verwendet wurden,
- wobei der ID-Token dazu konfiguriert ist, in Abhängigkeit eines Umschaltkommandos jeden der geschützten Kommunikationskanäle zu aktivieren und zu deaktivieren, wobei eine Aktivierung die Wiederverwendung der gespeicherten kryptographischen Schlüssels des zu aktivierenden Kommunikationskanals beinhaltet.

Nach Ausführungsformen erfolgt das Senden der Teil-Attributspezifikation selektiv an dasjenige der identifizierten AP-Computersysteme, welches hinsichtlich eines der folgenden Kriterien einen höheren Wert als die anderen identifizierten AP-Computersysteme aufweist:
- Anzahl der in der Teil-Attributspezifikation spezifizierten Attribute, die bereitgestellt werden können;
- gewährtes Vertrauensniveau der bereitgestellten Attribute,
- Menge aktuell verfügbarer Datenverarbeitungsressourcen;
- Grad der bisher beobachteten Zuverlässigkeit und Verfügbarkeit des identifizierten AP-Computersystems.

Nach Ausführungsformen beinhaltet die Adresse des ID-Tokens eine URL, die einen Zugriff auf den ID-Token über das Netzwerk mittels eines an das Nutzer-Computersystem gekoppelten Lesegeräts ermöglicht, wobei die URL die Adresse des ID-Tokens beinhaltet.

Nach Ausführungsformen weist der ID-Token eine Kommunikationsschnittstelle zur Kommunikation mit einem Lesegerät des Nutzer-Computersystems auf,
- wobei die Kommunikationsschnittstelle des ID-Token zur drahtlosen Kommunikation und zur drahtlosen Einkopplung von Energie in den ID-Token durch das Lesegerät ausgebildet ist, um den ID-Token mit der für seinen Betrieb erforderlichen elektrischen Energie zu versorgen; und/oder
- wobei der ID-Token einen flüchtigen elektronischen Speicher aufweist, in dem die Attributspezifikation und/oder die Teil-Attributspezifikationen dieser Attributspezifikation gespeichert wird, sodass die Attributspezifikation(en) aus dem flüchtigen elektronischen Speicher gelöscht werden, wenn der ID-Token aus der Reichweite des Lesegeräts entfernt wird, und wobei die aufgrund des Schreibzugriffs der ersten und zweiten AP-Computersysteme in dem ID-Token gespeicherten ersten und zweiten Mengen der Attribute in dem nichtflüchtigen elektronischen Speicher gespeichert werden, sodass auf diese durch einen nachfolgenden weiteren Lesezugriff aufgrund einer weiteren Dienstanforderung zugegriffen werden kann; oder
- wobei alternativ die Attributspezifikation und die ermittelten Attributmengen in dem nicht-flüchtigen Speicher gespeichert werden.

Der ID-Token oder dessen flüchtiger Speicher ist so konfiguriert, sodass die Attributspezifikation und/oder die Teil-Attributspezifikationen aus dem flüchtigen elektronischen Speicher gelöscht werden, wenn der ID-Token aus der Reichweite des Lesegeräts entfernt wird. Dies kann die Datensicherheit erhöhen. Ein neuer Protokollablauf ist in diesem Fall zu starten falls das Token vor Bereitstellung aller angeforderten Attribute aus der Reichweite des Lesegeräts entfernt wird. Hierdurch wird vermieden, dass sich der ID-Token in einem undefinierten Zustand befindet, wenn zum Beispiel das Token nach Speicherung der zweiten Attributspezifikation aus der Reichweite des Lesegeräts entfernt wird.

Somit bringen Ausführungsformen der Erfindung eine Vielzahl von Vorteilen mit sich:
Es ist möglich, eine Vielzahl von Attributen, die von unterschiedlichen Attributprovidern bereitgestellt werden, in einzigen Verfahren abzufragen und einem berechtigten Dienst zur Verfügung zu stellen. Es ist also möglich, nutzerspezifische Attribute dezentral in einer Vielzahl von Attribut Provider Computersystemen zu speichern. Dies kann die Datensicherheit erhöhen, da keiner der Attributprovider über sämtliche personenbezogenen Attribute des Nutzers verfügt. Außerdem werden Attribute oftmals dezentral erhoben (Gesundheitsdaten, Daten bezüglich der Kreditwürdigkeit, Adressdaten, Daten bezüglich des Alters, Daten bezüglich des Vorliegens einer Fahrerlaubnis und andere). Somit ist es möglich, dezentral erhobene Daten einem Dienst zur Verfügung zu stellen, ohne diese Attribute zunächst zusätzlich in einem zentralen Speicher zusammen zu führen. Dies erhöht die Datensicherheit, da ein doppeltes Vorhalten der Daten vermieden wird.

Außerdem wird die hierfür nötige Übertragung von Daten (zum Beispiel über Netzwerk) an eine zentrale Datenbank vermieden. Dies reduziert auch weitere Probleme, die bei der Verwendung eines einzelnen zentralen AP-Computersystems auftreten, nämlich das Problem, dass die zentral gespeicherten Attribute oftmals veraltet sind, weil die Übermittlung aktualisierter Attribute (Änderungen der Kreditwürdigkeit, der Wohnadresse, der Erlaubnis zum Führen eines Fahrzeugs etc.) oftmals nur zeitverzögert, unvollständig oder aus Datenschutzgründen überhaupt nicht von behördlichen Zweigstellen oder privaten Stellen an einen zentralen Server übermittelt werden. Erfindungsgemäß wird gar nicht erst der Versuch gemacht, alle Attribute eines Nutzers, die für Dienste möglicherweise relevant sind, zentral zu speichern. Vielmehr wird ein einheitliches Verfahren bereitgestellt, dass die Bereitstellung dezentral und verteilt gespeicherter Attribute an einen Dienst ermöglichst, und das in einer möglichst effizienten Weise, die dem Nutzer möglichst hohen Schutz bezüglich der Anonymität seiner Daten bzw. bezüglich des angefragten Dienstes bietet.

Die Identifikation und Einbeziehung mehrerer AP-Computersysteme (ggf. ach mehrere AP-Computersysteme einer Klasse) kann zudem die Ausfallsicherheit erhöhen, falls z.B. eines der Attribut-Provider-Systeme aus technischen oder anderen Gründen aktuell nicht verfügbar ist, die Attribute aber von einem anderen Attribut-Provider-Computersystem bezogen werden können. Eine parallele Anforderung von Attributen bei mehreren Attribut-Provider-Computersystemen gleichzeitig hat den Vorteil, dass die Geschwindigkeit der Attributermittlung erhöht werden kann, insbesondere, wenn die jeweils angeforderten Attributmengen disjunkt sind. Eine sequentielle, iterative Anforderung von Attributen bei mehreren AP-Computersystemen so lange, bis alle Attribute einer bestimmten Klasse oder alle in der Attributspezifikation spezifizierten Attribute ermittelt und an das APV-Computersystem zurückgegeben wurden, kann vorteilhaft sein, da durch Einbeziehung einer Vielzahl von Attribut-Provider-Computersystemen eine sehr breite Palette an Attributen bereitgestellt werden kann. Dies dient auch dem Datenschutzt, denn es ist nun möglich, dass einzelne Attribut-Provider nur einen sehr kleinen Ausschnitt der Attribute einer Person kennen.

Viele ID-Token wie zum Beispiel Smartcards sind als passive Elemente zudem nicht in der Lage, die Kommunikation mit mehreren anderen Kommunikationspartnern zu steuern. Andererseits soll kein anderer Kommunikationsteilnehmer Einsicht in sämtliche Attribute und Attributspezifikationen bekommen, sodass sich das Problem ergibt, wie ein anderer Kommunikationsteilnehmer die Kontrolle übernehmen kann. Das Nutzercomputersystem beispielsweise hat keinen Einblick in die übertragenen Attributspezifikationen oder die übertragenen Attribute, was eine Kontrolle der Kommunikation zum Beispiel durch das Nutzer-Computersystem erschwert.

Vorliegend kommunizieren das Dienstcomputersystem, das APV-Computersystem und das Nutzer-Computersystem so miteinander, dass ein koordinierter Datenfluss zwischen einer Vielzahl von Kommunikationsteilnehmern ermöglicht wird, ohne dass das Nutzer-Computersystem Einblick in die übertragenen Attributspezifikationen oder Attribute erhält.

Die oben dargestellten Schritte haben den Vorteil, dass es dem Dienstcomputersystem ermöglicht wird, die von ihm benötigten Attribute in Form einer Attributspezifikation auf dem ID-Token zu speichern und danach die Steuerung an andere Komponenten, insbesondere das Nutzercomputersystem und das APV Computersystem, zu übergeben. Somit wird eine komplexe Koordination des Datenaustausches durch Middleware-Komponenten und das APV Computersystem ermöglicht, ohne dass diese Komponenten hierfür mehr Einblick in die Attributspezifikationen bzw. Attribute erhalten als unbedingt erforderlich. Dies erhöht die Datensicherheit. Es wird somit ein komplexes und gleichzeitig sicheres Verfahren zur Bereitstellung verteilt gespeicherter, personenbezogene Attribute an einen Dienst bereitgestellt, welches auch auf passive ID-Token anwendbar ist.

Zum Beispiel kennt das APV-Computersystem für Klassen von Attributen ein oder mehrere AP-Computersysteme, die die in der vom Dienst-Computersystem spezifizierten Attributspezifikation spezifizierten Attribute bereitstellen können. Das APV-Computersystem verwaltet selbst vorzugsweise keine Attribute.

Die Übertragung der Attribute bzw. Attributspezifikationen über den geschützten Kommunikationskanal erhöht die Datensicherheit. Insbesondere hat somit das Nutzer-Computersystem keine Möglichkeit auf die übertragenen Attribute bzw. Attributspezifikationen zuzugreifen. Nach Ausführungsformen sind Daten, die über den ersten und zweiten geschützten Kommunikationskanal übertragen werden, vor dem Zugriff des Nutzer-Computersystems geschützt. Der Schutz kann z.B. auf einer Verschlüsselung der übertragenen Daten beruhen, z.B. auf einer Ende-zu-Ende Verschlüsselung.

Nutzer-Computersysteme, zum Beispiel Smartphones, Notebooks oder Desktop-PCs sind oftmals einer Vielzahl von Angriffen ausgesetzt. Viren und Trojaner können über USB Sticks oder E-Mails auf das Nutzer-Computersystem übertragen werden. Sogar wenn das Nutzer-Computersystem von einem an sich berechtigten Nutzer, dem die übertragenen Attribute gehören, bedient wird, ist es dennoch sehr vorteilhaft, dass das Nutzer-Computersystem nicht auf diese sensiblen Daten zugreifen kann, da nie mit völliger Sicherheit ausgeschlossen werden kann, dass sich auf dem Nutzer-Computersystem Schadsoftware befindet, die die übertragenen Daten nach außen kommunizieren könnte.

Nach Ausführungsformen umfasst der Aufbau des ersten geschützten Kommunikationskanals den Aufbau eines lokalen geschützten Kommunikationskanals zwischen dem Nutzer-Computersystem und ID-Token; der Aufbau des lokalen geschützten Kommunikationskanals kann z.B. über einen Diffie-Hellmann Schlüsselaustausch erfolgen. Ferner umfasst der Aufbau des ersten geschützten Kommunikationskanals die Durchführung der gegenseitigen Authentifizierung des Nutzer-Computersystems und des ID-Tokens, wobei Authentifizierungsdaten über den lokalen geschützten Kommunikationskanal übermittelt werden.

Der lokale geschützte DatenKommunikationskanal ermöglicht somit insbesondere die sichere Übermittlung von Authentifizierungsdaten des Nutzers, zum Beispiel einer PIN, an den ID-Token.

Nach Ausführungsformen sendet das Nutzer-Computersystem in Antwort auf den Empfang des Terminierungs-Signals ein Umschaltkommando "SC[CA]#1" von dem Nutzer-Computersystem an den ID-Token um den ID-Token zu veranlassen, den ersten geschützten Kommunikationskanal "SM[CA]#1" zu aktivieren. Das Umschaltkommando kann also z.B. den Kanal, auf welchen umgeschaltet werden soll, spezifizieren. Das ID-Provider-Modul liest die geschriebenen Attributmengen aus dem geschützten Speicherbereich über den aktivierten geschützten ersten Kommunikationskanal aus.

Somit übt das Nutzer-Computersystem Kontrolle über die Datenübertragung aus, ohne dass es selbst die übertragenen Attribute analysieren müsste um festzustellen, ob sämtliche vom Dienst benötigten Attribute bereits erfolgreich ermittelt und an den ID-Token übertragen wurden. Dieses "Wissen" wird vielmehr über das Terminierungssignal kommuniziert.

Nach Ausführungsformen sendet das APV-Computersystem nach erfolgtem Schreiben der Attributspezifikation in dem geschützten Speicherbereich ein Umschaltkommando "(SC[PACE])" an den ID-Token über den ersten geschützten Kommunikationskanal, wobei das Umschaltkommando "SC[PACE]" den ID-Token dazu veranlasst, den lokalen geschützten Kommunikationskanal "SM[PACE]" zu aktivieren. In Antwort auf den Erhalt des Terminierungs-Signals durch das Nutzer-Computersystem sendet das Nutzer-Computersystem ein weiteres Umschaltkommando "SC[CA]#1" über den aktivierten lokalen Kommunikationskanal an den ID-Token. Das weitere Umschaltkommando "SC[CA]#1" veranlasst den ID-Token dazu, den ersten geschützten Kommunikationskanal "SM[CA]#1" zu aktivieren. Das ID-Provider-Modul liest daraufhin die geschriebenen Attributmengen aus dem geschützten Speicherbereich über den aktivierten geschützten ersten Kommunikationskanal "SM[CA]#1" aus.

Somit wird auch bei passiven ID-Token sichergestellt dass sobald alle vom Dienst benötigten Attribute erfolgreich auf dem ID-Token gespeichert wurden ein Auslesen dieser Attribute durch das ID-Providermodul eingeleitet wird, welches wiederum die Attribute dem Dienst-Computersystem zur Verfügung stellt.

Manche ID-Token unterstützen nur einen aktiven Kanal. Bei diesen ID-Token kann eine Aktivierung eines von mehreren Kommunikationskanälen, z.B. in Antwort auf ein Umschaltsignal, die Deaktivierung aller anderen Kanäle beinhalten. "Deaktivierung" bedeutet hier, dass ein deaktivierter Kanal mit einem geringeren rechnerischen Aufwand wieder aktiviert werden kann als dies z.B. für den Aufbau eines dieses Kanals de novo erforderlich wäre.

Nach Ausführungsformen sendet das APV-Computersystem nach erfolgtem Schreiben aller erhaltenen Attributmenge in den geschützten Speicherbereich ein Umschaltkommando "SC[PACE]" an den ID-Token über den zweiten geschützten Kommunikationskanal. Das Umschaltkommando "SC[PACE]" veranlasst den ID-Token dazu, den lokalen geschützten Kommunikationskanal "SM[PACE]" zu aktivieren. Alternativ dazu kann der ID-Token auch automatisch nach jedem erfolgten Schreibzugriff des APV-Computersystems für die einzelnen Attributmengen den lokalen Kanal SM[PACE] reaktivieren, also vom inaktiven in den aktiven Zustand überführen.

Für die gegenseitigen Authentifizierung des APV-Computersystems und des ID-Tokens wird der aktivierte lokale geschützten Kommunikationskanal zwischen ID-Token und Nutzer-Computersystem zur Übermittlung von Authentifizierungsdaten verwendet. Die Verwendung von Umschaltkommandos zur Reaktivierung bereits etablierter Kommunikationskanäle ermöglicht eine schnelle und ressourcenschonende (re-) Aktivierung des lokalen Kommunikationskanals sodass über diesen sensible Authentifizierungsdaten zwischen dem APV-Computersystem und dem ID-Token ausgetauscht werden können.

Nach Ausführungsformen speichert der ID-Token die kryptographischen Schlüssel, die zum Aufbau eines jeden der geschützten Kanäle verwendet wurden. Der ID-Token ist dazu konfiguriert, in Abhängigkeit eines Umschaltkommandos "SC[PACE]", "SC[CA]#1", "SC[CA]#2"" jeden der einmal aufgebauten, geschützten Kommunikationskanäle zu aktivieren und zu deaktivieren. Eine Aktivierung eines Kommunikationskanals beinhaltet die Wiederverwendung der gespeicherten kryptographischen Schlüssels des zu aktivierenden Kommunikationskanals. Dies kann die Geschwindigkeit des Verfahrens ganz erheblich beschleunigen und die Rechenlast für den ID-Token reduzieren, da die Generierung kryptographischer Schlüssel und der Aufbau geschützter Kommunikationskanäle z.B. durch Durchführung kryptographischer Protokolle zeitintensiv und rechenaufwändig ist.

Nach Ausführungsformen analysiert das APV-Computersystem die Attributspezifikation und/oder Teile dieser Attributspezifikation ("Teil-Attributspezifikationen") um alle Klassen von Attributen zu ermitteln, denen zumindest eines der in der ersten Attributspezifikation spezifizierten Attribute angehört. Ferner ermittelt das APV-Computersystem das erste, zweite und jedes weiteren der AP-Computersysteme aus einer Vielzahl anderer AP-Computersysteme als diejenigen AP-Computersysteme, die dazu ausgebildet sind, auf den Nutzer bezogene Attribute einer der ermittelten Attributklassen bereitzustellen.

Nach Ausführungsformen können auch mehrere AP-Computersysteme vom APV Computersystem für eine bestimmte Klasse identifiziert werden. Bezüglich einer von einem Dienst angeforderten Auskunft über nutzerspezifische Attribute bezüglich der Kreditwürdigkeit des Nutzers kann z.B. ein Bank-AP-Computersystem einer ersten Bank nur Auskunft über die zuverlässige Bedienung laufender Kredite bei dieser ersten Bank geben während ein Bank-AP-Computersystem einer zweiten Bank nur Auskunft über die zuverlässige Bedienung laufender Kredite bei dieser zweiten Bank geben kann; Gemäß einem anderen Beispiel kann es sich bei den Attributen einer Klasse um Gesundheitsdaten handeln und ein erstes AP-Computersystem stellt Patientendaten zur Verfügung, die von einem Kardiologen erfasst wurden, während ein zweites AP-Computersystem Patientendaten zur Verfügung stellt, die von einem Allgemeinmediziner erhoben wurden. Das APV-Computersystem veranlasst in diesem Fall alle identifizierten AP-Computersysteme derselben Klasse (z.B. Gesundheitsdaten) dazu, möglichst viele der in der für Gesundheitsdaten erstellten Teil-Attributspezifikation spezifizierten Attribute bereitzustellen und an das APV-Computersystem zurückzusenden. Dies kann insbesondere dann vorteilhaft sein, wenn die Attribute einer Klasse von mehreren unterschiedlichen Stellen (dezentral) erhoben werden. Der Dienst muss sich nicht darum kümmern, woher er alle benötigten Daten beziehen kann. Noch nicht einmal das APV-Computersystem muss für jedes einzelne Attribut einer Klasse wissen, welches der gesundheitsdatenbezogenen AP-Computersysteme ein bestimmtes Attribut bereitstellen kann. Es reicht aus, dass das APV Computersystem diejenigen AP-Computersysteme kennt, die in ihrer Gesamtheit die angeforderten Attribute bereitstellen können, wobei sich der jeweilige Beitrag der einzelnen APs sich dynamisch während der Abarbeitung des Verfahrens ergibt. Das Verfahren ist also auch sehr flexibel und besonders für die Einbindung mehrerer Daten- bzw. Attributquellen ohne zentrales Datenpooling geeignet.

Nach Ausführungsformen beinhaltet die Adresse des ID-Tokens eine URL, die einen Zugriff auf den ID-Token über das Netzwerk mittels eines an das Nutzer-Computersystem gekoppelten Lesegeräts ermöglicht. Die URL beinhaltet die Adresse des ID-Tokens, also z.B. eine IP Adresse des Nutzer-Computersystems und eine Portnummer, über welche das Lesegerät an das Nutzer-Computersystem angeschlossen ist, sodass der ID-Token in dem Lesegerät eindeutig identifizierbar und adressierbar ist. Beispielsweise kann das APV-Computersystem die URL in einem Request, in dem beispielsweise das Triggersignal an das APV-Computersystem gesendet wird, nutzen, um sich gegenüber dem in der URL spezifizierten ID-Token zu authentifizieren und nach erfolgreicher Authentifizierung die die einzelnen Teil-Attributspezifikationen zu lesen und die von den AP-Computersystemen entsprechend ermittelten und bereitgestellten Attributmengen über den geschützten zweiten Kommunikationskanal in den ID-Token zu schreiben.

Die Übermittlung der Attributspezifikationen an die jeweiligen AP-Computersysteme kann z.B. parallel erfolgen, was die Geschwindigkeit des Verfahrens erhöht. Das Speichern der jeweils ermittelten Attributmengen durch das APV-Computersystem kann sequenziell in der Reihenfolge der Bereitstellung durch die einzelnen AP-Computersysteme oder gesammelt nach Erhalt sämtlicher Attributmengen erfolgen.

Im Weiteren werden Ausführungsformen der Erfindung mit Bezugnahme auf die Zeichnungen näher erläutert. Es zeigen:
- Figur 1: ein Blockdiagramm einer Ausführungsform eines erfindungsgemäßen Computersystems,
- Figur 2: ein Blockdiagramm einer Ausführungsform eines erfindungsgemäßen Computersystems unter Berücksichtigung der ausgetauschten Daten,
- Figur 3: ein Flussdiagramm einer Ausführungsform eines erfindungsgemäßen Verfahrens,
- Figur 4: ein Schema des Datenaustauschs gemäß einer Ausführungsform des erfindungsgemäßen Verfahrens.

Elemente der nachfolgenden Ausführungsformen, die einander gleichen oder einander entsprechen, sind jeweils mit identischen Bezugszeichen gekennzeichnet.

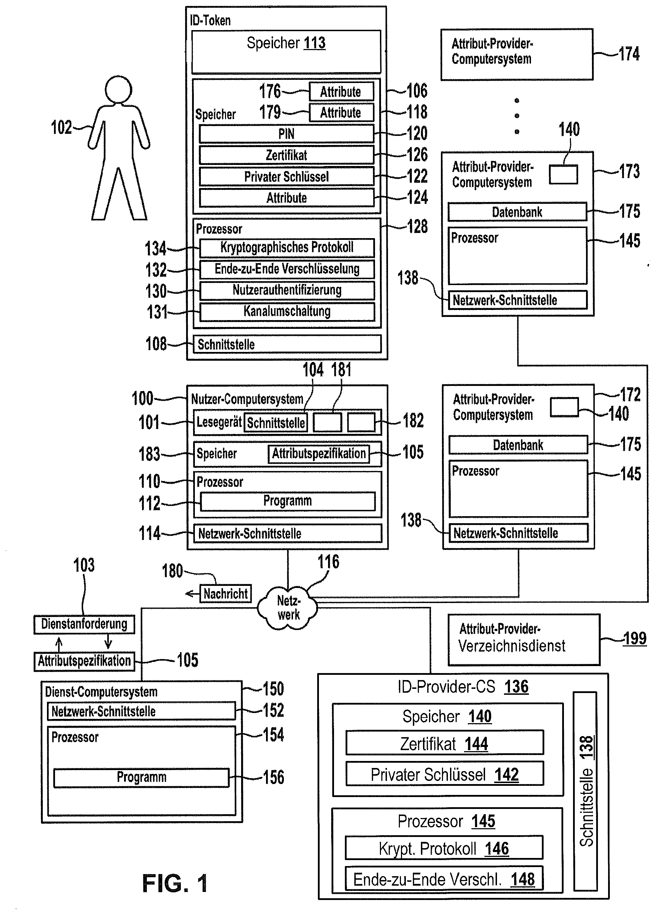

Die **Figur 1** zeigt ein Nutzer-Computersystem 100 eines Nutzers 102. Bei dem Nutzer-Computersystem 100 kann es sich um einen Personalcomputer, einen tragbaren Computer, wie zum Beispiel einen Laptop oder Palmtop-Computer, einen Personal Digital Assistant, ein mobiles Telekommunikationsgerät, insbesondere ein Smart Phone, oder dergleichen handeln. Das Nutzer-Computersystem 100 hat ein Lesegerät 101 mit einer Schnittstelle 104 zur Kommunikation mit einem ID-Token 106, der eine entsprechende Schnittstelle 108 aufweist.

Das Nutzer-Computersystem 100 hat zumindest einen Prozessor 110 zur Ausführung von Programminstruktionen 112 sowie eine Netzwerk-Schnittstelle 114 zur Kommunikation über ein Netzwerk 116. Bei dem Netzwerk kann es sich um ein Computernetzwerk, wie zum Beispiel das Internet, handeln.

Der ID-Token 106 hat einen elektronischen Speicher 118 mit geschützten Speicherbereichen 120, 122 und 124. Der geschützte Speicherbereich 120 dient zur Speicherung eines Referenzwerts, der für die Authentifizierung des Nutzers 102 gegenüber dem ID-Token 106 benötigt wird. Bei diesem Referenzwert handelt es sich beispielsweise um eine Kennung, insbesondere eine so genannte Personal Identification Number (PIN), oder um Referenzdaten für ein biometrisches Merkmal des Nutzers 102, welches für die Authentifizierung des Nutzers gegenüber dem ID-Token 106 verwendet werden kann.

Der geschützte Bereich 122 dient z.B. zur Speicherung eines privaten Schlüssels und der geschützte Speicherbereich 124 dient z.B. zur Speicherung von Attributen, zum Beispiel des Nutzers 102, wie zum Beispiel dessen Name, Wohnort, Geburtsdatum, Geschlecht, und/oder von Attributen, die den ID-Token selbst betreffen, wie zum Beispiel die Institution, die den ID-Token erstellt oder ausgegeben hat, die Gültigkeitsdauer des ID-Tokens, einen Identifikator des ID-Tokens, wie zum Beispiel eine Passnummer oder eine Kreditkartennummer. Die Adressdaten 176 des Nutzers können beispielsweise einer anderen Attributklasse angehören und von einem anderen AP-Computersystem bereitgestellt werden als die Attribute, die den ID-Token näher spezifizieren oder als Attribute 179, die zum Beispiel Gesundheitsdaten spezifizieren.

Der elektronische Speicher 118 kann ferner einen Speicherbereich 126 zur Speicherung eines Zertifikats aufweisen. Das Zertifikat beinhaltet einen öffentlichen Schlüssel, der dem in dem geschützten Speicherbereich 122 gespeicherten privaten Schlüssel zugeordnet ist. Das Zertifikat kann nach einem Public Key Infrastruktur (PKI) Standard erstellt worden sein, beispielsweise nach dem X.509 Standard. Das Zertifikat muss nicht zwangsläufig in dem elektronischen Speicher 118 des ID-Tokens 106 gespeichert sein. Alternativ oder zusätzlich kann das Zertifikat auch in einem öffentlichen Verzeichnisserver gespeichert sein.

Der ID-Token 106 hat einen Prozessor 128. Der Prozessor 128 dient zur Ausführung von Programminstruktionen 130, 132 und 134. Die Programminstruktionen 130 dienen zur Nutzerauthentifizierung, d.h. zur Authentifizierung des Nutzers 102 gegenüber dem ID-Token.

Bei einer Ausführungsform mit PIN gibt der Nutzer 102 seine PIN zu seiner Authentifizierung ein, beispielsweise in das Nutzer-Computersystem 100. Durch Ausführung der Programminstruktionen 130 wird dann auf den geschützten Speicherbereich 120 zugegriffen, um die eingegebene PIN mit dem dort gespeicherten Referenzwert der PIN zu vergleichen. Für den Fall, dass die eingegebene PIN mit dem Referenzwert der PIN übereinstimmt, gilt der Nutzer 102 als authentifiziert.

Alternativ wird ein biometrisches Merkmal des Nutzers 102 erfasst. Beispielsweise hat der ID-Token 106 hierzu einen Fingerabdrucksensor oder ein Fingerabdrucksensor ist an das Nutzer-Computersystem 100 angeschlossen. Die von dem Nutzer 102 erfassten biometrischen Daten werden durch Ausführung der Programminstruktionen 130 bei dieser Ausführungsform mit den in dem geschützten Speicherbereich 120 gespeicherten biometrischen Referenzdaten verglichen. Bei hinreichender Übereinstimmung der von dem Nutzer 102 erfassten biometrischen Daten mit den biometrischen Referenzdaten gilt der Nutzer 102 als authentifiziert.

Die Programminstruktionen 134 dienen zur Ausführung der den ID-Token 106 betreffenden Schritte eines kryptographischen Protokolls zur Authentifizierung eines ID-Provider-Moduls 136 gegenüber dem ID-Token 106. Bei dem kryptographischen Protokoll kann es sich um ein Challenge-Response-Protokoll basierend auf einem symmetrischen Schlüssel oder einem asymmetrischen Schlüsselpaar handeln.

Beispielsweise wird durch das kryptographische Protokoll ein Extended Access Control-Verfahren implementiert, wie es für maschinenlesbare Reisedokumente (machine-readable travel documents - MRTD) von der internationalen Luftfahrtbehörde (ICAO) spezifiziert ist. Durch erfolgreiche Ausführung des kryptographischen Protokolls authentifiziert sich das ID-Provider-Modul 136 gegenüber dem ID-Token und weist dadurch seine Leseberechtigung zum Lesen der in dem geschützten Speicherbereich 124 gespeicherten Attribute, die bereits auf dem ID-Token vorhanden und/oder von ein oder mehreren der AP-Computersysteme 172, 173, 174 zur Verfügung gestellt wurden, nach. Die Authentifizierung kann auch gegenseitig sein, d.h. auch der ID-Token 106 muss sich dann gegenüber dem ID-Provider-Modul 136 nach demselben oder einem anderen kryptographischen Protokoll authentifizieren.

Die Programminstruktionen 132 dienen zur Ende-zu-Ende-Verschlüsselung von zwischen dem ID-Token 106 und dem ID-Provider-Modul 136 übertragenen Daten, zumindest aber der von dem ID-Provider-Modul 136 aus dem geschützten Speicherbereich 124 ausgelesenen Attribute. Für die Ende-zu-Ende-Verschlüsselung kann ein symmetrischer Schlüssel verwendet werden, der beispielsweise anlässlich der Ausführung des kryptographischen Protokolls zwischen dem ID-Token 106 und dem ID-Provider-Modul 136 vereinbart wird.

Alternativ zu der in der Figur 1 dargestellten Ausführungsform kann das Nutzer-Computersystem 100 mit seiner Schnittstelle 104 nicht unmittelbar mit der Schnittstelle 108 kommunizieren, sondern über ein an die Schnittstelle 104 angeschlossenes Lesegerät für den ID-Token 106. Über dieses Lesegerät, wie zum Beispiel einen so genannten Klasse 2-Chipkarten-Terminal, kann auch die Eingabe der PIN erfolgen.

Das ID-Provider-Modul 136 hat eine Netzwerk-Schnittstelle 138 zur Kommunikation über das Netzwerk 116. Das ID-Provider-Modul 136 hat ferner einen Speicher 140, in dem ein privater Schlüssel 142 des ID-Provider-Moduls 136 sowie das entsprechende Zertifikat 144 gespeichert ist. Auch bei diesem Zertifikat kann es sich beispielsweise um ein Zertifikat nach einem PKI-Standard, wie zum Beispiel X.509 handeln.

Das ID-Provider-Modul 136 hat ferner zumindest einen Prozessor 145 zur Ausführung von Programminstruktionen 146 und 148. Durch Ausführung der Programminstruktionen 146 werden die das ID-Provider-Modul 136 betreffende Schritte des kryptographischen Protokolls ausgeführt. Insgesamt wird also das kryptographische Protokoll durch Ausführung der Programminstruktionen 134 durch den Prozessor 128 des ID-Tokens 106 sowie durch Ausführung der Programminstruktionen 146 durch den Prozessor 145 des ID-Provider-Moduls 136 implementiert.

Die Programminstruktionen 148 dienen zur Implementierung der Ende-zu-Ende-Verschlüsselung auf Seiten des ID-Provider-Moduls 136, beispielsweise basierend auf dem symmetrischen Schlüssel, der anlässlich der Ausführung des kryptographischen Protokolls zwischen dem ID-Token 106 und dem ID-Provider-Modul 136 vereinbart worden ist. Prinzipiell kann jedes an sich vorbekannte Verfahren zur Vereinbarung des symmetrischen Schlüssels für die Ende-zu-Ende-Verschlüsselung verwendet werden, wie zum Beispiel ein Diffie-Hellman-Schlüsselaustausch.

Das ID-Provider-Modul 136 befindet sich vorzugsweise in einer besonders geschützten Umgebung, insbesondere in einem so genannten Trust-Center, sodass das ID-Provider-Modul 136 in Kombination mit der Notwendigkeit der Authentifizierung des Nutzers 102 gegenüber dem ID-Token 106 den Vertrauensanker für die Authentizität der aus dem ID-Token 106 ausgelesenen Attribute bildet.

Ein Dienst-Computersystem 150 kann zur Entgegennahme einer Bestellung oder eines Auftrags für eine Dienstleistung oder ein Produkt, insbesondere eine Online-Dienstleistung, ausgebildet sein. Beispielsweise kann der Nutzer 102 online über das Netzwerk 116 ein Konto bei einer Bank eröffnen oder eine andere Finanz- oder Bankdienstleistung in Anspruch nehmen. Das Dienst-Computersystem 150 kann auch als Online-Warenhaus ausgebildet sein, sodass der Benutzer 102 beispielsweise online ein Mobiltelefon oder dergleichen erwerben kann. Ferner kann das Dienst-Computersystem 150 auch zur Lieferung von digitalen Inhalten ausgebildet sein, beispielsweise für den Download von Musik- und/oder Videodaten oder als Behördenserver für eine eGovernment Anwendung.

Das Dienst-Computersystem 150 hat hierzu eine Netzwerk-Schnittstelle 152 zur Verbindung mit dem Netzwerk 116. Ferner hat das Dienst-Computersystem 150 zumindest einen Prozessor 154 zur Ausführung von Programminstruktionen 156. Durch Ausführung der Programminstruktionen 156 werden beispielsweise dynamische HTML-Seiten generiert, über die der Nutzer 102 seinen Auftrag oder seine Bestellung eingeben kann.

Je nach der Art des beauftragten oder bestellten Produkts oder der Dienstleistung muss das Dienst-Computersystem 150 Attribute des Nutzers 102 und/oder dessen ID-Token 106 anhand eines oder mehrerer vorgegebener Kriterien überprüfen. Nur wenn diese Prüfung bestanden wird, wird die Bestellung oder der Auftrag des Nutzers 102 entgegengenommen und/oder ausgeführt.

Beispielsweise ist es für die Eröffnung eines Bankkontos oder den Kauf eines Mobiltelefons mit einem dazugehörigen Vertrag erforderlich, dass der Nutzer 102 seine Identität gegenüber dem Dienst-Computersystem 150 offenbart, und dass diese Identität überprüft wird. Im Stand der Technik muss der Nutzer 102 hierzu beispielsweise seinen Personalausweis vorlegen. Dieser Vorgang wird durch das Auslesen der digitalen Identität des Nutzers 102 aus seinem ID-Token 106 ersetzt.

Je nach Anwendungsfall können für die Erbringung des Dienstes weitere Attribute erforderlich sein, die in dem ID-Token zunächst nicht vorhanden sind. Hierzu kann das in der Figur 1 gezeigte Computersystem AP-Computersysteme 172 und 173 und ein APV-Computersystem 199 aufweisen. Das APV-Computersystem 199 kann prinzipiell gleich aufgebaut sein wie das ID-Provider-Modul oder ein solches beinhalten oder an dieses operativ gekoppelt sein (um z.B. mit dem ID-Token eine gegenseitige Authentifizierung durchführen und einen Ende-zu-Ende verschlüsselten Kanal aufbauen zu können) und verfügt über zusätzliche Funktionalitäten zum Senden von Attributspezifikationen an mehrere AP-Computersysteme, zum Empfang von Attributmengen von diesen AP-Computersystemen sowie zum Schreiben der empfangenen Attributmengen in den ID-Token.

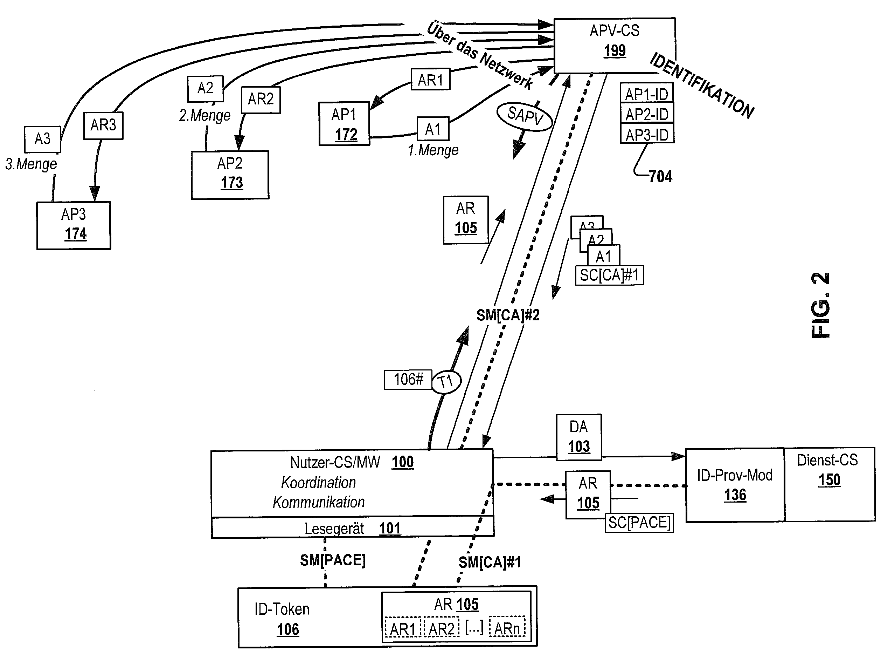

**Figur 2** zeigt eine Ausführungsform eines verteilten Systems, welches im wesentlichen die bereits in Figur 1 beschriebenen Komponenten und Computersysteme beinhaltet. Die durch Ende-zu-Ende Verschlüsslung geschützten Kommunikationskanäle zwischen dem ID-Token und den jeweiligen Kommunikationspartnern (ID-Provider-Modul, diverse AP-Computersysteme, Nutzer-Computersystem, APV-Computersystem) sind durch gestrichelte Linien dargestellt.

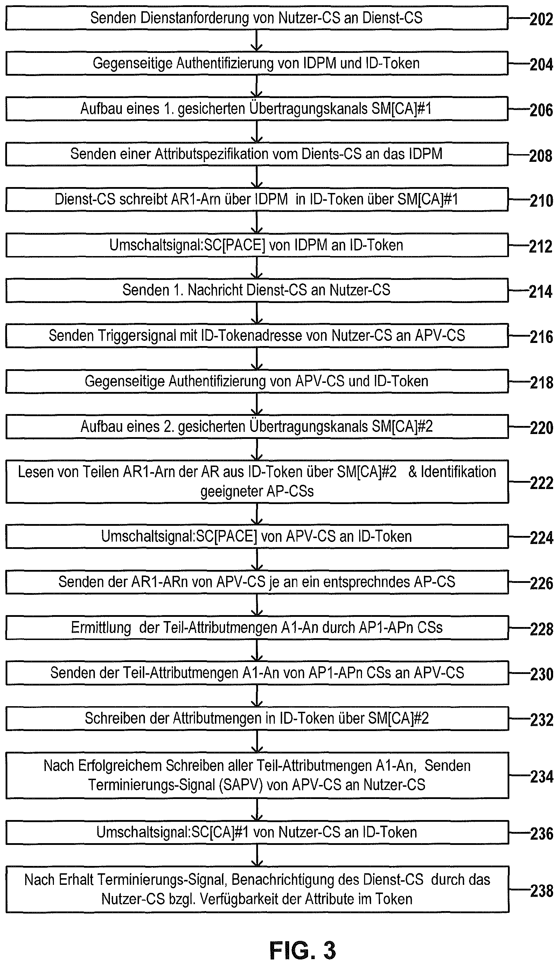

Zur Inanspruchnahme eines von dem Dienst-Computersystem 150 zur Verfügung gestellten Dienstes wird beispielsweise wie folgt vorgegangen (wobei im Folgenden Bezug genommen wird auf die **Figuren 1****,** **2** **und** **3**):
Der Nutzer 102 baut zunächst mithilfe seines Nutzer-Computersystems 100 eine Internetsession über das Netzwerk 116 zu dem Dienst-Computersystem 150 auf. Über diese Internetsession wird in Schritt 202 eine Dienstanforderung 103 von dem Nutzer-Computersystem 100 an das Dienst-Computersystem 150 übertragen, womit der Nutzer 102 die Erbringung eines Dienstes des Dienst-Computersystems 150 anfordert. Das Dienst-Computersystem 150 reagiert auf diese Dienstanforderung 103 mit der Übermittlung einer Attributspezifikation 105 (über ein Netzwerk oder innerhalb eines einzelnen Computersystems) an das ID-Provider-Modul. Die Attributspezifikation 105 ("Attribut-Request") wird im Folgenden auch als "AR" bezeichnet.

Der Empfang der AR durch das ID-Provider-Modul leitet die gegenseitige Authentifizierung von ID-Provider-Modul und ID-Token in Schritt 204 und den Aufbau eines ersten geschützten Kommunikationskanals SM[CA]#1 zwischen ID-Provider-Modul und ID-Token in Schritt 206 ein. Damit wird der erste gesicherte Kommunikationskanal zum aktiven DatenKommunikationskanal des ID-Tokens.

In Schritt 208 schreibt das ID-Provider Modul 136 die Attributspezifikation 105, die diejenigen Attribute spezifiziert, die für die Erbringung des mit der Dienstanforderung 103 angeforderten Dienstes zu erfüllen sind, in den geschützten Speicher 183 des ID-Token. Die Attributspezifikation 105 wird dabei über den ersten geschützten Kommunikationskanal SM[CA]#1 übermittelt.

In Schritt 210 überträgt das ID-Provider-Modul zusammen mit der ersten Attributspezifikation oder auch nach Übertragung der ersten Attributspezifikation ein Umschaltsignal SC[CA]PACE an den ID-Token um diesen in Schritt 212 zu veranlassen, auf den lokalen Kanal SM[PACE] umzuschalten. Das Umschalten auf den lokalen Kanal, der eine geschützte Kommunikationsverbindung zwischen Nutzer-Computersystem und dem ID-Token über das Lesegerät darstellt, ermöglicht es weiteren Computersystemen, z.B. dem APV-Computersystem 199, eine gegenseitige Authentifizierung mit dem ID-Token einzuleiten (Schritt 218) und den Aufbau einer Ende-zu-Ende Verschlüsselung zwischen diesem weiteren Computersystem und dem ID-Token über das Nutzer-Computersystem herzustellen. Das Nutzer-Computersystem kann über das Netzwerk 116 Daten von den weiteren Computersystemen empfangen und über den geschützten lokalen Kommunikationskanal an den ID-Token weiterleiten.

Das Nutzer-Computersystem erhält von dem Dienst-Computersystem, dem ID-Provider-Modul oder dem ID-Token ein Signal (z.B. in Form einer in Schritt 214 vom Dienst-CS versendeten Nachricht), dass die Attributspezifikation in dem ID-Token gespeichert wurde.

In Schritt 216 sendet das Nutzer-Computersystem daraufhin die Adresse des ID-Token 106# und ein Triggersignal T1 an das APV-Computersystem. Die Adresse 106# kann z.B. eine IP-Adresse des Nutzer-Computersystems und eine Portnummer, über welches das ID-Token über das Lesegerät adressiert werden kann, enthalten. Das Triggersignal T1 beinhaltet die Information, dass die Attributspezifikation erfolgreich in dem ID-Token gespeichert wurde. Das Triggersignal und die Adresse können zusammen oder sequentiell versendet werden. Die Token-Adresse kann Bestandteil des Triggersignals sein.

In Antwort auf den Empfang des Triggersignals T1 und der Adresse 106# führen das APV-Computersystem und der ID-Token in Schritt 218 (auf Initiative des APV-Computersystems) eine gegenseitige Authentifizierung durch. Dies kann über das Netzwerk und das Nutzer-Computersystem erfolgen, zu welchem das ID-Token ja über den aktiven lokalen Kommunikationskanal verbunden ist. Hierbei wird die Adresse #106 des ID-Tokens, zum Beispiel eine URL mit Portangabe, verwendet.

In Schritt 220 folgt nach gegenseitiger erfolgreicher Authentifizierung der Aufbau eines zweiten geschützten Kommunikationskanals SM[PACE] zwischen dem APV-Computersystem und dem ID-Token. Damit wird der zweite gesicherte Kommunikationskanal SM[CA]#2 zum aktiven DatenKommunikationskanal des ID-Tokens.

In einem weiteren Schritt (hier nicht dargestellt) kann entweder das ID-Provider-Modul bereits beim Schreiben der Attributspezifikation oder das APV-Computersystem die AR analysieren und in mehrerer Teil-Attributspezifikationen aufteilen oder die Teil-Attributspezifikationen zusätzlich zu der ursprünglich vom Dienst spezifizierten AR in dem Token speichern. Vorzugsweise enthalten die unterschiedlichen Teil-Attributspezifikationen AR1, AR2, ..., ARn Spezifikationen unterschiedlicher Attributklassen, z.B. "Adressbezogene Attribute", "finanzbezogene Attribute", "gesundheitsbezogene Attribute", "fahrerlaubnisbezogene Attribute", etc.

In Schritt 222 liest das APV-Computersystem 199 die Teil-Attributspezifikationen AR1-ARn aus dem ID-Token über den zweiten geschützten Kommunikationskanal aus.

In Schritt 224 sendet das APV-Computersystem ein Umschaltsignal SC[PACE] an den ID-Token, welches den ID-Token veranlasst, den geschützten lokalen Kommunikationskanal SM[PACE] zu reaktivieren.

in Schritt 226 analysiert das APV-Computersystem die Teil-Attributspezifikationen AR1-ARn und ermittelt mehrere AP-Computersysteme, die in der Lage sind, die in den jeweiligen Teil-Attributspezifikationen AR1-ARn spezifizierten Attribute bereitzustellen. Beispielsweise kann das APV-Computersystem die AP-Computersysteme 172,173 und 174 identifizieren, die jeweils Attribute einer anderen Attributklasse bereitstellen können. Das APV-Computersystem sendet nun diese Teilspezifikationen AR1-ARnüber das Netzwerk an die entsprechenden AP-Computersysteme 172, 173, 174. Das AP-Computersystem 172 erfährt also nicht die Gesamtheit der angefragten Attribute, sondern erhält nur einen Ausschnitt der angefragten Attribute, der in der Regel keine Rückschlüsse auf den anfragenden Dienst zulässt. Vorzugsweise erfolgt die Übertragung der Teil-Attributspezifikationen verschlüsselt, zum Beispiel über das Internet mittels des HTTPS Protokolls. Bei der Übertragung der Teil-Attributspezifikationen werden vorzugsweise keine Daten, die Aufschluss über die Identität des ID-Tokens oder des Nutzers ermöglichen, an die AP-Computersysteme übertragen.

In Antwort auf den Erhalt der Teil-Attributspezifikation AR1 ermittelt das AP-Computersystem AP1 172 in Schritt 228 die in dieser spezifizierten Attribute. Beispielsweise werden die Attribute aus einer Datenbank 175, die operativ an das AP1-Computersystem gekoppelt ist, gelesen.

Nachdem das AP-Computersystem 172 die Menge von Attributen, die in der Teil-Attributspezifikation AR1 spezifiziert ist, ermittelt hat, sendet es die Attributmenge in Schritt 230 über das Netzwerk zurück an das APV-Computersystem. Vorzugsweise erfolgt das Senden der Attributmenge über eine verschlüsselte Verbindung, zum Beispiel über eine HTTPS Verbindung. In analoger Weise senden auch alle anderen identifizierten und angefragten AP-Computersysteme 173, 174 ihre jeweils ermittelten Attributmengen zurück an das APV-Computersystem.

Spätestens nachdem das APV-Computersystem von allen angefragten AP-Computersystemen eine Attributmenge erhalten hat, gegebenenfalls aber auch nach dem Erhalt jeder einzelner der Attributmengen, schreibt das APV-Computersystem die erhaltenen Attributmengen in Schritt 232 in den geschützten Speicherbereich des ID-Tokens. Das Schreiben kann so erfolgen, dass Attributmengen einer bestimmten Klasse in einen klassenspezifischen Sektor des Speichers geschrieben werden. Vorzugsweise muss das APV-Computersystem seine Berechtigung zum Schreiben auf den geschützten Speicherbereich bzw. einzelne Sektoren mittels eines Berechtigungszertifikats nachweisen.

Optional kann das APV-Computersystem nach jedem Schreiben einer Attributmenge die zugehörige Attribut-Spezifikation von dem ID-Token löschen.

Nachdem sämtliche Attributmengen, die in Antwort auf den Versand der Teil-Attributspezifikationen empfangen wurden, sendet das APV-Computersystem in Schritt 234 ein Terminierungs-Signals SAPV an das Nutzercomputersystem 100, welches daraufhin in Schritt 236 ein Umschaltsignal SC[CA]#1 an das Id-Token sendet.

Nach Erhalt des Terminierungs-Signals benachrichtigt das Nutzer-Computersystem in Schritt 238 das Dienst-Computersystem, dass die von dem Dienst angefragten Attribute nun verfügbar sind und in dem Token gespeichert vorliegen.

Obwohl also weder Nutzer-Computersystem noch (sofern die Attributmengen verschlüsselt sind), das APV-Computersystem die Daten, die über die geschützten Kanäle übertragen werden, lesen können und somit nicht feststellen können, ob und wann die in den Teil-Attributspezifikationen AR1-ARn spezifizierten Attribute erfolgreich ermittelt und in dem ID-Token gespeichert wurden, ermöglicht das Terminierungssignal eine Koordination des Datenaustauschs.

Nach Ausführungsformen beinhaltet das ID-Token eine Uhr, die feststellt, ob eine vordefinierte maximale Zeitdauer zwischen dem Schreiben der Attributspezifikation und dem Empfang sämtlicher zugehöriger Attributmengen (und gegebenenfalls dem Löschen der entsprechenden Attributspezifikationen) vergangen ist. Das ID-Token unterbindet jeden Schreibzugriff, falls die maximale Zeitdauer überschritten ist.

In Antwort auf den Empfang des Terminierungs-Signals SAPV sendet das Nutzer-Computersystem in Schritt 238 also eine "zweite" Nachricht an das Dienst-Computersystem um das Dienst-Computersystem davon in Kenntnis zu setzen, dass sämtliche für den Dienst relevanten und in der ersten Attributspezifikation 105 spezifizierten Attribute erfolgreich ermittelt wurden und sich nun in dem ID-Token befinden. Dies ermöglicht es dem ID-Provider-Modul des Dienst-Computersystems, über den reaktivierten ersten DatenKommunikationskanal sämtliche auf dem ID-Token gespeicherten und in der ersten Attributspezifikation spezifizierten Attribute auszulesen und dem Dienst zur Verfügung zu stellen. Der Dienst kann nun die Attribute analysieren und den Dienst in Abhängigkeit vom Ergebnis dieser Analyse dem Nutzer 102 bereitstellen.

Das Dienst-Computersystem empfängt die Attribute von dem ID-Provider-Modul 136 nach manchen Ausführungsformen über ein Netzwerk, z.B. das Internet, insb. wenn das Modul 136 als eigenständiges ID-Provider Computersystem ausgebildet ist. Alternativ dazu können die Attribute auch über einen System-Bus eines Dienst-Computersystems an den Dienst bzw. an mit dem Dienst assoziierte Programmodule des Dienst-Computersystems übermittelt werden, z.B. falls das ID-Provider-Modul integraler Bestandteil des Dienst-Computersystems ist.

Um den oben genannten geschützten ersten Kommunikationskanal vom ID-Provider-Modul des Dienst-Computersystems zum ID-Token aufzubauen, können mehrere Schritte notwendig sein. So kann nach manchen Ausführungsformen das Nutzer-Computersystem 100 den Nutzer 102 dazu auffordern, sich gegenüber dem ID-Token 106 zu authentifizieren. Hierzu gibt der Nutzer 102 seine PIN zum Beispiel über das Lesegerät 101 oder eine Tastatur des Nutzer-Computersystems 100 ein. Zur Verifikation der PIN wird zwischen dem Nutzer-Computersystem 100, das heißt dessen Lesegerät 101, und dem ID-Token 106 ein lokaler gesicherter Kommunikationskanal SM[PACE] aufgebaut, beispielsweise mithilfe eines Diffie-Hellman Schlüsselaustausches, insbesondere nach dem vom Bundesamt für Sicherheit in der Informationsverarbeitung (BSI) spezifizierten PACE-Protokoll. Über das Nutzer-Computersystem 100 baut das ID-Provider-Modul 136 einen geschützten Kommunikationskanal SM[CA]#1 über das Netzwerk 116 auf, über den sich das ID-Provider-Modul 136 gegenüber dem ID-Token 106 authentifiziert, und zwar unter Verwendung des Zertifikats 144.

Vorzugsweise erfolgt eine gegenseitige Authentifizierung des IT-Tokens 106 und dem jeweiligen Authentifizierungspartner (also z.B. ID-Provider-Modul 136 und APV-Computersystem 199) unter Verwendung von Zertifikaten, das heißt es erfolgt eine sogenannte CA und eine TA. Hierbei wird auch ein Session Key vereinbart, mit dem der jeweils aufgebaute geschützte Kommunikationskanal mit Ende-zu-Ende-Verschlüsselung zwischen dem ID-Token 106 und dem Authentifizierungspartner über das Nutzer-Computersystem 100 und das Netzwerk 116 aufgebaut wird, wobei der lokale geschützte Kommunikationskanal SM[PACE] in manchen Ausführungsformen zusätzlich zum geschützten Datenkommunikationskanal SM[CA]1 oder SM[CA]2 bestehen bleibt.

Bei dem ID-Provider Modul des Dienst-CS kann es sich um eine integrale Komponente des Dienst-Computersystems oder eine externe Komponente handeln die mit dem Dienst-CS interoperabel ist. Nach Ausführungsformen verwendet auch das APV-Computersystem ein ID-Provider-Modul (das als interne oder externe Komponente des APV-Computersystems ausgebildet sein kann), zum Datenaustausch mit dem ID-Token. Dabei verwenden das Dienst-Computersystem und das APV-Computersystem jeweils eigene ID-Provider-Module um den Datenschutz der ausgetauschten Attribute zu gewährleisten.

Die Kommunikation zwischen dem Nutzer-Computersystem 100 und dem ID-Token 106 erfolgt vorzugsweise über den lokalen Kommunikationskanal SM[PACE]. Die Kommunikation zwischen dem ID-Token und dem ID-Provider-Modul 136 erfolgt über einen ersten geschützten Kommunikationskanal SM[CA]#1. Die Kommunikation zwischen dem ID-Token und dem APV-Computersystem 199 erfolgt über einen zweiten geschützten Kommunikationskanal SM[CA]#2. Die Kommunikation zwischen dem APV-Computersystem und jeweils einem der AP-Computersysteme 172, 173, 174 erfolgt jeweils über ein Netzwerk, z.B. das Internet, vorzugsweise verschlüsselt, z.B. mittels HTTPS.

Ein inaktiver Kommunikationskanal ist ein Kanal, für welchen eine Sitzung und eine gesicherte, zum Beispiel verschlüsselte Verbindung aufrechterhalten wird, obwohl dieser Kanal nicht aktuell zur Datenübertragung genutzt wird. Ein aktiver Kanal ist ein Kanal, der aktuell für die Datenübertragung genutzt wird. Der Kommunikationskanal kann also durch ein Umschaltkommando sehr schnell und ressourcenschonend wieder aktiviert werden, ohne dass neue Sitzungsschlüssel ausgehandelt werden müssen. Bei diesem sequenziellen bereitstellen von Attributmengen A1, A2, A3 und dem sofortigen auslesen dieser Attributmengen unmittelbar nach deren Bereitstellung durch das ID-Provider-Modul aktiviert und deaktiviert das Nutzer-Computersystem den ersten sicheren Kanal zu dem ID-Provider-Modul in Abhängigkeit vom Empfang von Umschaltsignalen. Dies beschleunigt das Verfahren, da keine neuen Sitzungsschlüssel zur Etablierung des ersten geschützten Kommunikationskanals zwischen IT-Token und ID-Provider-Modul ausgehandelt werden müssen, was insbesondere angesichts der begrenzten Prozessorleistung vieler ID-Token von großem Vorteil sein kann.

In manchen Ausführungsformen ist das APV-Computersystem so konfiguriert, dass es zunächst über den geschützten Kommunikationskanal SM[CA]#2 für alle generierten Teil-Attributspezifikationen (also die zweite AR1, dritte AR2, vierte AR3 usw. Attributspezifikation) eine Signaturanfrage an das ID-Token sendet. Die Signaturanfrage kann zusammen mit den Teil-Attributspezifikation an das ID-Token übermittelt werden. Das ID-Token signiert (optional: nach einer expliziten Bestätigung der Signatur durch den Nutzer z.B. durch eine PIN-Eingabe) jede der Teil-Attributspezifikationen. Das APV Computersystem empfängt die signierten Teil-Attributspezifikationen AR1_{sign}, AR2_{sign}, AR3_{sign}, ..., oder nur die jeweils generierte Signatur von dem ID-Token und leitet die signierten Teil-Attributspezifikationen bzw. Signaturen jeweils an dasjenige der AP-Computersysteme weiter, welches zur Bereitstellung der betreffenden Teil-Attributspezifikation ausgebildet ist. Jedes der AP-Computersysteme erhält vom APV-Computersystem also "seine" Teil-Attributspezifikation bereits in einer vom ID-Token signierten Form und prüft, bevor es die darin spezifizierten Attribute ermittelt, die Validität der Signatur, z.B. mittels eines öffentlichen Signaturprüfschlüssel der dem ID-Token zugeordnet ist. Beispielsweise kann das Token vom Nutzer bereits so konfiguriert sein, Attributspezifikationen, die von einem bestimmten APV Computersystem bereitgestellt werden oder eine bestimmte Attributklasse betreffen immer automatisch zu signieren.

Dieses Verfahren ist vorteilhaft, da die einzelnen AP Computersysteme prüfen können, ob die Attribute berechtigterweise (also mit Wissen und Wollen des Nutzers) angefragt wurden schon bevor sie eine Kommunikationsverbindung mit dem ID-Token aufbauen bzw. die entsprechenden Attribute bereitstellen. Dies reduziert den Verbrauch von Rechenkapazitäten seitens der AP-Computersysteme und beschleunigt das Verfahren. Für den Datenschutz ist es außerdem vorteilhaft, dass bei Signaturinvalidität kein Lese-oder Schreibzugriff auf den geschützten Speicher des ID-Tokens erfolgt.

In manchen Ausführungsformen generiert das Computersystem, das die Signaturanfrage erstellt (also vorzugsweise das APV Computersystem oder ein AP-Computersystem 172, 173, 174 - welchem dann aber die Adresse des Nutzer-Computersystems von dem APV-Computersystem mitgeteilt werden muss), eine Signaturbestätigungsanfrage und sendet diese Signaturbestätigungsanfrage an das Nutzer-Computersystem 100. Die Signaturbestätigungsanfrage ist eine Anfrage an den Nutzer 102 des Nutzer-Computersystems, dem auch der ID-Token zugewiesen ist, die Signierung einer Attributspezifikation durch das ID-Token zu genehmigen. Beispielsweise kann die Signaturbestätigungsanfrage einen Hinweis auf die vom Dienst angefragten und in einer Teil-Attributspezifikation spezifizierten Attribute enthalten, die dem Nutzer über das Display des Nutzer-Computersystems angezeigt wird. Eine Signaturbestätigungsanfrage ermöglicht es dem Nutzer, explizit dem ID-Token die Erlaubnis zu erteilen, eine Teil-Attributspezifikation in Antwort auf eine Signaturanfrage zu signieren. Die Erlaubnis kann z.B. dadurch eingeholt werden dass das Nutzer-Computersystem den Nutzer zur Eingabe einer PIN auffordert um sich mit dieser gegenüber dem ID-Token als Inhaber des ID-Tokens zu authentifizieren.. Falls der Nutzer die Erlaubnis zur Signierung einer Attributspezifikation erteilt, signiert das ID-Token die Attributspezifikation, für welche auch die Signaturbestätigung des Nutzers 102 vorliegt.

Der ID-Token erzeugt die Signatur jeweils durch Ausführung von Programminstruktionen 135 durch den Prozessor 128 des ID-Tokens 106, welcher einen Generator zur Erzeugung digitalen Signaturen bildet, wobei dies unter Verwendung zum Beispiel des privaten Signaturschlüssels 122 des ID-Token erfolgt. Die Signaturberechtigungsanfrage kann als Abfrage einer Signatur-PIN von dem Nutzer 102 ausgebildet sein. Die PIN Eingabe kann zum Beispiel über eine Nutzerschnittstelle, wie zum Beispiel eine Tastatur des Nutzer-Computersystems 100 oder des Lesegeräts 101 erfolgen. Zur Freischaltung der Ausführung der Programminstruktionen 135 prüft der ID-Token 106, ob die von dem Nutzer 102 eingegebene Kennung mit dem in dem Speicher 118 gespeicherten Referenzwert für die Signatur-PIN (SPIN), der in dem geschützten Speicherbereich 121 gespeichert ist, übereinstimmt.

Der ID-Token 106 sendet die signierte zweite Attributspezifikation oder nur die Signatur derselben an das AP1-Computersystem 172. Das AP1 Computersystem 172 prüft die Validität der Signatur und ermittelt die darin spezifizierten Attribute nur dann, wenn die Prüfung ergibt, dass die Signatur valide ist. In analoger Weise können auch die weiteren AP-Computersysteme 173, 174, 1722 eine Signatur der jeweils gelesenen Attributspezifikationen erhalten und prüfen und ggf. im Falle der Validität der Signatur die in der jeweils erhaltenen Attributspezifikation spezifizierten Attribute ermitteln.

Das APV-Computersystem 199kann analog zu dem ID-Provider-Modul 136 aufgebaut sein oder ein ID-Provider-Modul beinhalten, das heißt es verfügt über eine Netzwerk-Schnittstelle 138, einen Prozessor 145 zur Ausführung von Programminstruktionen 146, 148 und einen Speicher 140, in dem ein Zertifikat und ein privater Schlüssel gespeichert sind. Bei dem Zertifikat handelt es sich vorzugsweise um ein Berechtigungszertifikat, in dem jeweils eine Berechtigung für Schreibzugriffe auf den ID-Token 106 bzw. einzelne Sektoren spezifiziert ist.

Das APV-Computersystem 199 hat vorzugsweise nur Rechte zum Lesen der Teil-Attributspezifikationen vom ID-Token, hat aber kein Recht, eine Attributspezifikation selbst im ID-Token zu speichern oder bereits gespeicherte Attribute (insb. anderer Sektoren) zu lesen.

Vorzugsweise hat auch das Nutzer-Computersystem 100 weder Lese-noch Schreibrechte bezüglich der Attributspezifikationen und der Attribute des ID-Tokens.

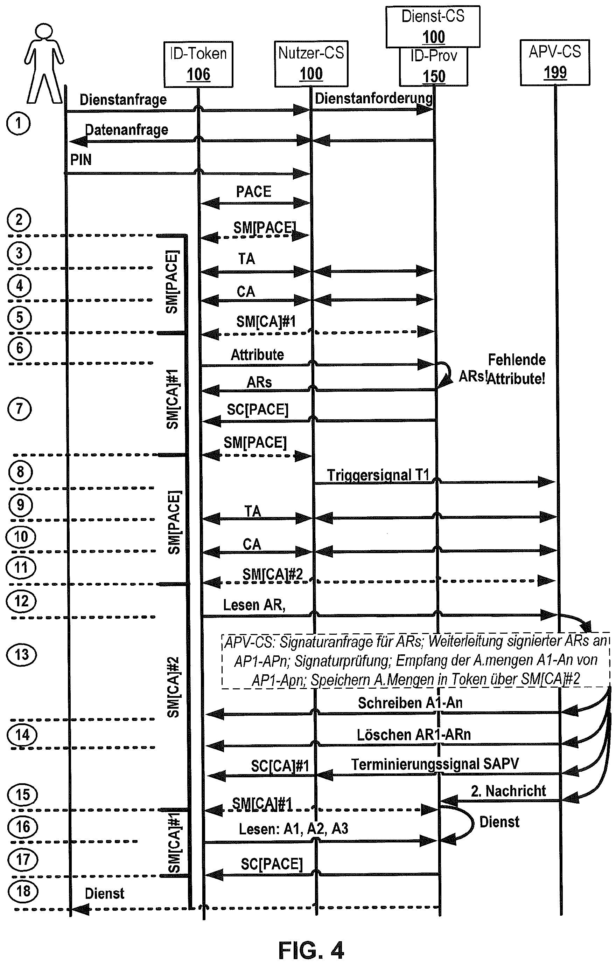

**Figur 4** zeigt eine schematische Darstellung eines Verfahrens gemäß Ausführungsform der Erfindung.

In Schritt (1) sendet das Nutzer-Computersystem 100 eine Dienstanforderung 103 eines Nutzers 102 über ein Netzwerk 116 einer Dienst-Computersystem 150, das mit einem ID-Provider-Modul 136 gekoppelt ist. Hierzu gibt der Nutzer beispielsweise eine URL in einen Internetbrowser seines Nutzer-Computersystems ein, um eine sogenannte Internetsession mit dem Dienst-Computersystem aufzubauen. Bei dem Dienst-Computersystem kann es sich zum Beispiel um einen Onlineshop oder ein anderes eCommerce-Portal oder einen Behördenserver, der eine eGovernment-Anwendung zur Verfügung stellt, handeln. Bei der Dienstanforderung des Nutzers kann es sich um die Übertragung einer Kaufentscheidung des Nutzers handeln, die der Nutzer zum Beispiel durch Anklicken eines virtuellen Bedienelements auf der Webseite des Dienst-Computersystems, wie zum Beispiel "Kaufen" oder "buy now" eingibt, wobei diese Dienstanforderung zum Beispiel als http-Request oder https-Request über die Internetsession an das Dienst-Computersystem übertragen werden kann. Bei einer eGovernment-Anwendung kann es sich analog dazu bei der Dienstanforderung um die Übertragung einer Anforderung des Nutzers eines behördlichen Vorgangs, wie zum Beispiel die Ausstellung einer Meldebescheinigung, die Anmeldung eines Kraftfahrzeugs oder die Meldung einer Wohnortänderung oder dergleichen handeln.

Das Dienst-Computersystem benötigt für die Erbringung des mit der Dienstanforderung angeforderten Dienstes Attribute des Nutzers und - je nach Anwendungsfall - auch Attribute des ID-Tokens selbst. Diese können vom Dienst-Computersystem in einer ersten Attributspezifikation 105 ("AR") spezifiziert sein. Beispielsweise kann die Attributspezifikation die Attribute Name, Geburtsdatum, Anschrift des Nutzers, Kontonummer des Nutzers, Kreditwürdigkeit des Nutzers sowie Gültigkeitsdauer des ID-Token beinhalten. Die Attribute gemäß dieser ersten Attributspezifikation benötigt das Dienst-Computersystem also zur Erbringung des Dienstes für den Nutzer.

In Antwort auf den Empfang der Dienstanforderung sendet das Dienstcomputersystem 150 die Attributspezifikation 105 an das ID-Provider-Modul 136. Die Attributspezifikation spezifiziert diejenigen Attribute, die das Dienst-Computersystem zur Erbringung des angeforderten Dienstes benötigt. Die Übertragung kann über das Netzwerk erfolgen. Alternativ ist das ID-Provider-Modul ein integraler Bestandteil des Dienst-Computersystems, sodass das Senden der ersten Attributspezifikation zum Beispiel über einen internen Datenbus oder eine LAN-Verbindung erfolgt.

In einem weiteren Schritt authentifiziert sich der Nutzer 102 gegenüber dem ID-Token. Hierzu gibt der Nutzer eine geheime Kennung, wie zum Beispiel die sogenannte Personal Identification Number (PIN) ein. Dies kann je nach Ausführungsform unmittelbar durch Eingabe in den ID-Token erfolgen, durch Eingabe in das Lesegerät oder durch Eingabe in das Nutzer-Computersystem. Vorzugsweise erfolgt die Authentifizierung des Nutzers gegenüber dem ID-Token mittels einer "Fernüberprüfung", worunter hier jedes Verfahren verstanden wird, bei dem die zu überprüfende Kennung nicht in den ID-Token unmittelbar eingegeben wird, um sie mit der dort gespeicherten Kennung zu vergleichen, sondern bei dem die Überprüfung mittels eines das Lesegerät und den ID-Token involvierenden Protokolls erfolgt, bei dem die Kennung, die in das Lesegerät eingegeben wird, nicht an den ID-Token übertragen werden muss. Entsprechende Protokolle sind an sich aus dem Stand der Technik bekannt, wie zum Beispiel Strong Password Only Authentication Key Exchange (SPEKE), Diffie-Hellman Encripted Key Exchange (DH-EKE), Bellovin-Merritt Protokoll oder Password Authenticated Connection Establishment (PACE). Das SPEKE-Protokoll ist beispielsweise bekannt aus www.jablon.org/speke97.html, US 6,792,533 B2 und US 7,139,917 B2. Unter anderem ebenfalls aus www.jablon.org/speke97.html ist das DH-EKE-Protokoll bekannt. Unter anderem aus US 5,241,599 ist das Bellovin-Merritt-Protokoll bekannt. Aus Technical Guideline TR-03110 des Bundesamt für Sicherheit in der Informationstechnik ist das PACE-Protokoll bekannt, welches sich besonders für elliptische Kurven-Kryptographie eignet, vergleiche hierzu auch DE 102007000587 A1 und DE 102013202001 A1. Vorzugsweise authentifiziert sich neben dem Nutzer auch das Nutzer-Computersystem gegenüber dem ID-Token, wobei in Schritt (2) auch ein lokaler gesicherter Kommunikationskanal SM[PACE], das heißt ein sogenannter Secure Messaging-Kanal, zwischen dem ID-Token und dem NutzerComputersystem aufgebaut werden kann, beispielsweise indem ein Session Key nach einem Diffie-Hellman-Protokoll zwischen dem ID-Token und dem NutzerComputersystem vereinbart wird. Der lokale Kommunikationskanal ist somit nun der aktive Kommunikationskanal.

Das ID-Provider-Modul und der ID-Token authentifizieren sich gegenseitig in den Schritten (3) und (4). Das ID-Provider-Modul authentifiziert sich gegenüber dem ID-Token beispielsweise über das Netzwerk 116 und weist vorzugsweise auch seine Berechtigung für einen Lesezugriff oder Schreibzugriff nach, indem es beispielsweise sein Berechtigungszertifikat über das Netzwerk an den ID-Token überträgt. Auch der ID-Token authentifiziert sich gegenüber dem ID-Provider-Modul, das heißt, es erfolgt sowohl die sogenannte Terminal Authentication (TA) des ID-Provider-Moduls gegenüber dem ID-Token in Schritt (3) und die Chip Authentication (CA) des ID-Tokens, das heißt des in dem ID-Token beinhalteten Chips mit dem Prozessor, gegenüber dem ID-Provider-Modul in Schritt (4). Die TA und die CA können gemäß BSI TR-03110 durchgeführt werden.

Hierbei kann in Schritt (5) ein erster gesicherter Kommunikationskanal SM[CA]#1 nach einem Secure-Messaging-Verfahren aufgebaut werden, indem bei der TA und/oder der CA ein Session Key zwischen dem ID-Token und dem ID-Provider-Modul für eine Ende-zu-Ende-Verschlüsselung vereinbart wird, wobei der lokale geschützte Kommunikationskanal bestehen bleibt.

Nach erfolgreicher gegenseitiger Authentifizierung kann in einem optionalen Schritt das ID-Provider-Modul einen Lesezugriff auf den ID-Token durchführen um die vom Dienst benötigten Attribute auszulesen. Falls die benötigten Attribute nicht ausgelesen können, oder per Default, schreibt das ID-Provider-Modul in Schritt 6 die Attributspezifikation AR 105 in einen geschützten Speicherbereich des ID-Tokens. Dabei kann bei Speicherung der AR im nicht-flüchtigen Speicher des ID-Tokens eine aus vorherigen Protokollsitzungen gespeicherte Attributspezifikation ersetzt werden. Das ID-Provider-Modul erzeugt dann ein erstes Umschaltkommando SC[PACE]. Das erste Umschaltkommando wird von dem ID-Provider-Modul an den ID-Token über den ersten geschützten Kommunikationskanal gesendet. Das Umschaltkommando bewirkt eine Umschaltung von dem ersten geschützten Kommunikationskanal SM[CA]#1 auf den lokalen geschützten Kommunikationskanal SM[PACE] in Schritt (7). Nachdem das Dienst-Computersystem über das ID-Provider Modul die Attributspezifikation erfolgreich in dem ID-Token gespeichert hat erzeugt es zudem eine "erste Nachricht" welche die Information beinhaltet dass eine Attributspezifikation in dem ID-Token gespeichert ist deren Attribute nicht aus dem Token gelesen werden konnten und die bearbeitet werden muss. Die erste Nachricht wird vom Dienst-Computersystem an das Nutzer-Computersystem übermittelt.

In Schritt (8) sendet das Nutzer-Computersystem in Antwort auf den Erhalt der ersten Nachricht ein Triggersignal T1 mit der Adresse des Tokens an ein APV-Computersystem 199. Das erste Triggersignal beinhaltet keinerlei Information bezüglich der vom Dienst angeforderten Attribute und beinhaltet somit weder die Attributspezifikation noch Teile derselben. Somit ist die Vertraulichkeit der angeforderten Attribute und auch die Art des angeforderten Dienstes gewährleistet falls das Triggersignal von unberechtigten Dritten abgefangen werden sollte. Das Triggersignal T1 beinhaltet jedoch eine Adresse #106 des ID-Tokens 106, zum Beispiel eine URL in Kombination mit einer Portnummer, die es dem ersten Attribut-Provider-Computersystem ermöglicht, mit dem ID-Token in Kontakt zu treten und eine gegenseitige Authentifizierung einzuleiten. Dieses veranlasst das APV-Computersystem, in Schritten (9) und (10) wie bereits beschrieben eine TA und eine CA mit dem ID-Token durchzuführen und nach erfolgreicher gegenseitiger Authentifikation in Schritt (11) einen zweiten geschützten Kommunikationskanal SM[CA]#2 aufzubauen. Hierbei kann ein zweiter gesicherter Kommunikationskanal SM[CA]#2 mit Ende-zu-Ende-Verschlüsselung zwischen dem ID-Token und dem APV-Computersystem aufgebaut werden, wobei der erste geschützte Kommunikationskanal inaktiviert wird.

In Schritt (12) liest das APV-Computersystem Teile der Attributspezifikation AR, also die Teil-Attributspezifikationen AR1, AR2, ..., ARn, aus dem ID-Token über den zweiten geschützten Kanal aus, analysiert diese und identifiziert mehrere AP-Computersysteme 172, 173, 174, die in der Lage sind, die in der Spezifikation AR spezifizierten Attribute bereitzustellen. Beispielsweise können Adressdaten von AP-Computersystem 172, Kreditwürdigkeitsinformationen von AP-Computersystem 173 bereitgestellt werden.

In mehreren nun folgenden Schritten (13), ..., (14) leitet das APV-Computersystem die Teil-Attributspezifikationen jeweils an eines der ermittelten AP-Computersysteme weiter und veranlasst die jeweiligen AP-Computersysteme, die in den Teil-Attributspezifikationen spezifizierten Attribute zu ermitteln und in Form einer Attributmenge dem APV-Computersystem zurückzusenden. Vorzugsweise sendet das APV-Computersystem nur die Teil-Attributspezifikation, nicht jedoch die Adresse 106# des ID-Tokens an die einzelnen AP-Computersysteme. Eine gegenseitige Authentifizierung des ID-Tokens und des entsprechenden AP-Computersystems unterbleibt. Die Teil-Attributspezifikationen können an die jeweiligen AP-Computersysteme in signierter Form gesendet werden wie bereits beschrieben.

Wenn das APV-Computersystem von allen AP1-APn-Computersystemen, an die eine Teil-Attributspezifikation versandt wurde, eine entsprechende Attributmenge erhalten hat, schreibt das APV-Computersystem die Attributmengen über den noch aktiven Kommunikationskanal SM[CA]#2 in den geschützten Speicherbereich des Tokens und löscht in Schritt 14 die zu den bereits geschriebenen Attributmengen gehörenden Teil-Attributspezifikationen.

In Schritt 15 sendet das APV-Computersystem ein Terminierungssignal SAPV an das Nutzer-Computersystem, welches wiederum ein Umschaltkommando zur Reaktivierung des ersten Kommunikationskanals an den ID-Token und eine "zweite" Nachricht an das Dienstcomputersystem sendet. Die zweite Nachricht beinhaltet, dass die Attribute nun vorliegen und aus dem Token gelesen werden können. In Schritt (15) reaktiviert das ID-Token in Antwort auf das Umschaltkommando den ersten geschützten Kommunikationskanal SM[CA]#1 und ermöglicht es dadurch dem ID-Provider-Modul des Dienst-Computersystems, die Attribute in Schritt (16) aus dem Token auszulesen.

Das Umschalten auf den geschützten ersten Kommunikationskanal SM[CA]#1 kann z.B. so erfolgen, dass der ID-Token nach dem Schreibzugriff des APV-Computersystems automatisch auf den lokalen gesicherten Kanal SM[PACE] "zurückfällt", d.h., nach einem erfolgreichen Schreibzugriff den lokalen gesicherten Kanal automatisch reaktiviert. Das Nutzer-Computersystem schaltet nach Erhalt eines Terminierungssignals SAPV von dem Kanal des zuletzt schreibenden AP-Computersystem (oder vom lokalen gesicherten Kommunikationskanal) auf den gesicherten ersten Kommunikationskanal SM[CA]#1 um, indem es ein Umschaltkommando UK über den lokalen Kommunikationskanal SM[PACE] an den ID-Token sendet, und den ID-Token dadurch veranlasst, auf den ersten gesicherten Kommunikationskanal umzuschalten. Der ID-Token ist bei den Umschaltvorgängen also passiv und zur automatischen Umschaltung ("Rückfall") auf den lokalen Kanal wie oben beschrieben konfiguriert.

Optional kann das Dienst-Computersystem in Schritt (17) ein weiteres Umschaltkommando an den ID-Token senden um den lokalen Kanal zu reaktivieren. In Schritt (18) erbringt das Dienst-Computersystem den angeforderten Dienst, sofern die gelesenen Attribute valide sind.

### Bezugszeichenliste

- 100: Nutzer-Computersystem
- 101: Lesegerät
- 102: Nutzer
- 103: Dienstanforderung
- 104: Lesegerätschnittstelle
- 105, AR: Attributspezifikation
- 106: ID-Token
- 108: Schnittstelle
- 110: Prozessor
- 112: Programminstruktionen
- 113: flüchtiger Speicher
- 114: Netzwerk-Schnittstelle
- 116: Netzwerk
- 118: elektronischer Speicher
- 120: geschützter Speicherbereich
- 122: geschützter Speicherbereich
- 124: geschützter Speicherbereich
- 126: Speicherbereich
- 128: Prozessor
- 130: Programminstruktionen
- 131: Programminstruktionen
- 132: Programminstruktionen
- 134: Programminstruktionen
- 136: ID-Provider-Modul
- 138: Netzwerk-Schnittstelle
- 140: Speicher
- 142: privater Schlüssel
- 144: Zertifikat
- 145: Prozessor
- 146: Programminstruktionen
- 150: Dienst-Computersystem
- 152: Netzwerk-Schnittstelle
- 154: Prozessor
- 156: Programminstruktionen
- 172-174: Attribut-Provider-Computersysteme
- 175: Datenbank
- 176, 179: Attribute
- 180: zweite Nachricht
- 181: Display
- 182: Bedienelement
- 183: Speicher
- 199: Attribut-Provider-Verzeichnis-Computersystem
- AR1: Teil-Attributspezifikation
- AR2: Teil-Attributspezifikation
- AR3: Teil-Attributspezifikation
- A1: erste Menge Attribute gemäß AR1
- A2: zweite Menge Attribute gemäß AR2
- A3: dritte Menge Attribute gemäß AR3
- T1: Triggersignal
- 202-238: Schritte
- SM[PACE]PACE: lokaler Kommunikationskanal
- SM[CA]#1: erster geschützter Kommunikationskanal
- SM[CA]#2: zweiter geschützter Kommunikationskanal
- #106: Adresse ID-Token 106
- SC[CA]#PACE: Umschaltkommando auf SM[PACE]
- SC[CA]#1: Umschaltkommando auf SM[CA]#1
- SC[CA]#2: Umschaltkommando auf SM[CA]#2

## Patentansprüche

1. Verfahren zum Lesen von Attributen aus einem ID-Token (106), der einem Nutzer (102) zugeordnet ist, wobei der ID-Token einen nichtflüchtigen elektronischen Speicher (118) mit einem geschützten Speicherbereich (124) aufweist, wobei ein Zugriff auf den geschützten Speicherbereich nur über einen Prozessor (128) des ID-Tokens möglich ist, mit folgenden Schritten:
- Senden (202) einer Dienstanforderung (103) eines Nutzers von einem Nutzer-Computersystem (100) an ein Dienst-Computersystem (150), welches mit einem ID-Provider-Modul (136) gekoppelt ist;
- in Antwort auf den Empfang der Dienstanforderung, Senden (208) einer Attributspezifikation (105) von dem Dienst-Computersystem an das ID-Provider-Modul, wobei die Attributspezifikation diejenigen Attribute spezifiziert, die das Dienst-Computersystem zur Erbringung des mit der Dienstanforderung angeforderten Dienstes benötigt, und gegenseitige Authentifizierung des ID-Provider-Moduls und des ID-Tokens;
- nach erfolgreicher gegenseitiger Authentifizierung (204) von ID-Provider-Modul und des ID-Token, Schreiben (210) der Attributspezifikation (105) in den geschützten Speicherbereich des ID-Tokens durch das ID-Provider-Modul und Senden (214) einer ersten Nachricht, dass die Attributspezifikation geschrieben wurde, von dem Dienst-Computersystem an das Nutzer-Computersystem;
- In Antwort auf den Empfang der ersten Nachricht, Senden (216) eines Triggersignals (T1) von dem Nutzer-Computersystem an ein APV-Computersystem (199), wobei das APV-Computersystem ein Attribut-Provider-Verzeichnis-Computersystem ist, wobei das Triggersignal frei ist von der Attributspezifikation (105) und von deren Teilen und eine Adresse (#106) des ID-Tokens (106) beinhaltet;
- in Antwort auf Empfang des Triggersignals, gegenseitige Authentifizierung (218) des APV-Computersystems (199) und des ID-Tokens unter Verwendung der Adresse;
- nach erfolgreicher gegenseitiger Authentifizierung von APV-Computersystem und des ID-Token, Lesen (222) mehrerer Teil-Attributspezifikationen (AR1, ..., ARn) der Attributspezifikation (AR) aus dem geschützten Speicherbereich des ID-Tokens durch das APV-Computersystem und Identifikation (222) mehrerer AP-Computersysteme (172, 173, 174) welche jeweils ein Attribut-Provider-Computersystem sind welches dazu ausgebildet ist, Attribute einer der Teil-Attributspezifikationen bereitzustellen;
- Senden (226) jede der Teil-Attributspezifikationen (AR1, ..., ARn) von dem APV-Computersystem an dasjenige der identifizierten AP-Computersysteme, welches dazu ausgebildet ist, die in dieser Teil-Attributspezifikation spezifizierten Attribute bereitzustellen;
- in Antwort auf Empfang jeder der Teil-Attributspezifikationen durch das für diese identifizierte AP-Computersystem, Ermittlung (228) einer Menge (A1,..., An) an Attributen, die in der Teil-Attributspezifikation spezifiziert sind, und Senden (230) der ermittelten Attributmenge von dem AP-Computersystem an das APV-Computersystem;
- Schreiben (232) der Attributmengen (A1,..., An) durch das APV-Computersystem auf den geschützten Speicherbereich des ID-Tokens;
- Senden(234) eines Terminierungs-Signals (SAPV) von dem APV-Computersystem an das Nutzer-Computersystem nach erfolgreichem Schreiben aller Attributmengen in dem ID-Token;
- In Antwort auf den Empfang des Terminierungs-Signals, Senden (238) einer zweiten (180) Nachricht von dem Nutzer-Computersystem an das Dienst-Computersystem um das Dienst-Computersystem zu veranlassen, die geschriebenen Attributmengen (A1, A2, .., An) über das ID-Provider-Modul aus dem geschützten Speicherbereich auszulesen.

2. Verfahren nach Anspruch 1, ferner mit:
- nach erfolgreicher gegenseitiger Authentifizierung von ID-Provider-Modul und ID-Token, Initialisierung des Aufbaus eines ersten geschützten Kommunikationskanals (SM[CA]#1) zwischen dem ID-Provider-Modul und dem ID-Token durch das ID-Provider-Modul, wobei das Schreiben der Attributspezifikation (105) über den ersten geschützten Kommunikationskanal erfolgt;
- nach erfolgreicher gegenseitiger Authentifizierung von APV-Computersystems und ID-Token, Initialisierung des Aufbaus eines zweiten geschützten Kommunikationskanal (SM[CA]#2) zwischen dem APV-Computersystem und dem ID-Token durch das APV-Computersystem, wobei das Lesen der Teil-Attributspezifikationen über den zweiten geschützten Kommunikationskanal erfolgt;
- wobei der zweite geschützte Kommunikationskanal (SM[CA]#2) während der Bereitstellung der Attribute durch die AP-Computersysteme aufrechterhalten wird; und
- wobei das Schreiben aller Teil-Attributmengen (A1, ..., An) über den bereits aufgebauten und für das Lesen der Teil-Attributspezifikationen verwendeten zweiten geschützten Kommunikationskanal (SM[CA]#2) erfolgt.

3. Verfahren nach Anspruch 2, wobei Daten, die über den ersten oder zweiten geschützten Kommunikationskanal übertragen werden, vor dem Zugriff des Nutzer-Computersystems geschützt sind.

4. Verfahren nach einem der Ansprüche 2-3, wobei der Aufbau des ersten geschützten Kommunikationskanals (SM[CA]#1) umfasst:
- Aufbau oder Reaktivierung eines lokalen geschützten Kommunikationskanals (SM[PACE]) zwischen dem Nutzer-Computersystem (100) und ID-Token;
- Durchführung der gegenseitigen Authentifizierung des Nutzer-Computersystems (100) und ID-Token (106) um den ersten geschützten Kommunikationskanal aufzubauen, wobei Authentifizierungsdaten über den lokalen geschützten Kommunikationskanal (SM[PACE]) übermittelt werden.

5. Verfahren nach einem der vorigen Ansprüche, wobei der ID-Token frei ist von einer software- oder hardwarebasierten Programmlogik, die dazu ausgebildet ist, in Abhängigkeit vom Inhalt des geschützten Speicherbereiches den Aufbau neuer oder die Aktivierung bestehender Kommunikationskanäle zu dem Nutzer-Computersystem, dem ID-Provider-Modul und/oder dem APV-Computersystem zu initiieren.

6. Verfahren nach einem der vorigen Ansprüche, ferner mit:
- In Antwort auf den Empfang des Terminierungs-Signals (SAPV), Senden eines Umschaltkommandos (SC[CA]#1) von dem Nutzer-Computersystem an den ID-Token um den ID-Token zu veranlassen, den ersten geschützten Kommunikationskanal (SM[CA]#1) zu aktivieren;
- Auslesen der geschriebenen Teil-Attributmengen (A1, A2, .., An) aus dem geschützten Speicherbereich durch das ID-Provider-Modul über den aktivierten geschützten ersten geschützten Kommunikationskanal (SM[CA]#1).

7. Verfahren nach einem der vorigen Ansprüche, ferner mit:
- Aufbau eines lokalen geschützten Kommunikationskanals (SM[PACE]) zur Übermittlung von Authentifizierungsdaten über den lokalen geschützten Kommunikationskanal im Zuge der gegenseitigen Authentifizierung des ID-Tokens und des ID-Provider-Computersystems;
- Nach erfolgtem Schreiben der Attributspezifikation (AR) in dem geschützten Speicherbereich, Senden eines Umschaltkommandos (SC[PACE]) von dem APV-Computersystem an den ID-Token über den ersten geschützten Kommunikationskanal, wobei das Umschaltkommando (SC[PACE]) den ID-Token dazu veranlasst, einen lokalen geschützten Kommunikationskanal (SM[PACE]) zu re-aktivieren.

8. Verfahren nach einem der vorigen Ansprüche, ferner mit:
- In Antwort auf den Erhalt des Terminierungs-Signals (SAPV) durch das Nutzer-Computersystem, Senden eines Umschaltkommandos (SC[CA]#1) über den aktivierten lokalen Kommunikationskanal, wobei das Umschaltkommando (SC[CA]#1) den ID-Token dazu veranlasst, den ersten geschützten Kommunikationskanal (SM[CA]#1) zu aktivieren;
- Auslesen der geschriebenen Attributmengen (A1, A2, .., An) aus dem geschützten Speicherbereich durch das ID-Provider-Modul über den aktivierten geschützten ersten geschützten Kommunikationskanal (SM[CA]#1).

9. Verfahren nach einem der vorigen Ansprüche, ferner mit:
- nach erfolgtem Schreiben aller Attributmengen (A1, ..., An) in dem geschützten Speicherbereich, löschen der Teil-Attributspezifikationen (AR1, ..., ARn) von dem ID-Token.

10. Verfahren nach einem der vorhergehenden Ansprüche, ferner mit:
- Analyse der Attributspezifikation durch das APV-Computersystem oder das Dienst-Computersystem zur Ermittlung der Teil-Attributspezifikationen (AR1-ARn), wobei die Teil-Attributspezifikationen klassenspezifische Teil-Attributspezifikationen darstellen welche jeweils nur Attribute einer bestimmten Klasse spezifizieren, wobei jedes der AP-Computersysteme dazu ausgebildet ist, Attribute einer oder mehrerer bestimmter Klassen bereitzustellen und wobei das APV-Computersystem dazu ausgebildet ist, jede der klassenspezifischen Teil-Attributspezifikationen selektiv an dasjenige AP-Computersystem zu senden, das zur Bereitstellung von Attributen der entsprechenden Attributklasse ausgebildet ist.

11. Verfahren nach einem der vorhergehenden Ansprüche, wobei das Lesen mehrerer Teil-Attributspezifikationen aus dem geschützten Speicherbereich des ID-Tokens umfasst:
- Übertragung einer Signaturanfrage von dem APV-Computersystem an das ID-Token;
- In Antwort auf die Signaturanfrage, Erzeugung einer digitalen Signatur jeder der Teil-Attributspezifikationen durch den ID-Token mittels eines in dem ID-Token geschützt gespeicherten privaten Signierschlüssels (Priv-K_{TOKEN});
- Durchführung des Lesens mehrerer Teil-Attributspezifikationen aus dem geschützten Speicherbereich des ID-Tokens wobei die Teil-Attributspezifikationen als signierte Teil-Attributspezifikationen gelesen werden;
- Prüfung der digitalen Signaturen der gelesenen Teil-Attributspezifikationen durch das APV-Computersystem mit einem öffentlichen Signaturprüfschlüssel (PubK_{TOKEN}), wobei das Senden der Teil-Attributspezifikationen an die identifizierten AP-Computersysteme nur für diejenigen Teil-Attributspezifikationen erfolgt, deren Signaturprüfung ergibt, dass deren digitale Signatur valide ist.

12. Verfahren nach einem der vorhergehenden Ansprüche ferner umfassend:
- Erzeugung eines asymmetrischen kryptographischen Schlüsselpaares durch das ID-Token, wobei das Schlüsselpaar einen privaten Entschlüsselungsschlüssel (PrivK_{DEC}) und einen öffentlichen Verschlüsselungsschlüssel (PubK_{ENC}) umfasst, wobei der private Entschlüsselungsschlüssel (PrivK_{DEC}) weder einem der AP-Computersysteme noch dem Nutzer-Computersystem noch dem APV-Computersystem zugänglich ist;
- Signatur des öffentlichen Verschlüsselungsschlüssel (PubK_{ENC}) mit dem privaten Signierschlüssel (PrivK_{Token}) des ID-Tokens,
- Auslesen des öffentlichen Verschlüsselungsschlüssels (PubK_{ENC}) und der Signatur des öffentlichen Verschlüsselungsschlüssel (PubK_{ENC}) durch das APV-Computersystem;
- Weiterleitung des öffentlichen Verschlüsselungsschlüssels (PubK_{ENC}) an die identifizierten AP-Computersysteme;
- Weiterleitung der Signatur des öffentlichen Verschlüsselungsschlüssels (PubK_{ENC}) durch das APV Computersystem an die identifizierten AP-Computersysteme;
- Durch jedes der identifizierten AP-Computersysteme, Prüfung der Signatur des öffentlichen Verschlüsselungsschlüssels (PubK_{ENC}) mittels des öffentlichen Signaturprüfschlüssels (PubK_{TOKEN}), und Verschlüsslung der durch dieses ermittelten Attributmenge (A1-An) mittels des öffentlichen Verschlüsselungsschlüssels (PubK_{ENC}), wobei jedes der AP-Computersysteme die Attribute nur ermittelt und bereitstellt wenn die Signatur des öffentlichen Signaturprüfschlüssels (PubK_{TOKEN}) valide ist, und wobei das APV-Computersystem die ermittelten Attributmengen in verschlüsselter Form von den identifizierten AP-Computersystemen empfängt und in verschlüsselter Form in den geschützten Speicher des ID-Tokens schreibt; und
- Entschlüsselung der verschlüsselten Attributmengen (A1-An) durch das ID-Token mittels des privaten Entschlüsselungsschlüssel (PrivK_{DEC}) und erneute Speicherung der Attributmengen (A1-An) in unverschlüsselter Form.

13. Verfahren nach Anspruch 12 wobei das asymmetrische kryptographische Schlüsselpaar beinhaltend den privaten Entschlüsselungsschlüssel (PrivK-_{DEC}) und den öffentlichen Verschlüsselungsschlüssel (PubK_{ENC}) temporär erzeugt wird, wobei vorzugsweise die Lebensdauer des Schlüsselpaars beschränkt ist auf die Zeit bis zur Durchführung des angeforderten Dienstes oder beschränkt ist auf die Lebensdauer des zweiten Kommunikationskanals (SM[CA]#2).

14. Verfahren nach einem der vorhergehenden Ansprüche,
- wobei die Authentifizierung des ID-Provider-Moduls gegenüber dem ID-Token mithilfe eines Berechtigungszertifikats (144) des ID-Provider-Moduls erfolgt, in dem Leserechte des ID-Provider-Moduls zum Lesen der Attributmengen (A1-An) aus dem ID-Token spezifiziert sind, wobei der ID-Token für die Lesezugriffe des ID-Provider-Moduls eine Prüfung der Leseberechtigung des ID-Provider-Moduls mithilfe des Berechtigungszertifikats durchführt; und
- wobei in dem Berechtigungszertifikat Schreibrechte des ID-Provider-Moduls zum Schreiben der Attributspezifikation und/oder der Teil-Attributspezifikationen (AR1-ARn) in dem ID-Token spezifiziert sind, wobei der ID-Token für die Schreibzugriffe des ID-Provider-Moduls eine Prüfung der Schreibberechtigung des ID-Provider-Moduls mithilfe des Berechtigungszertifikats durchführt.

15. Verfahren nach einem der vorhergehenden Ansprüche,
- wobei die Authentifizierung des APV-Computersystems (199) gegenüber dem ID-Token mithilfe eines Berechtigungszertifikats des APV-Computersystems erfolgt, in dem Leserechte zum Lesen der Teil-Attributspezifikationen spezifiziert sind und/oder in dem Schreibrechte des APV-Computersystems zum Schreiben der Attributmengen (A1-An) in dem ID-Token spezifiziert sind; und
- wobei der ID-Token eine Prüfung der Schreibberechtigung des APV-Computersystems mithilfe des Berechtigungszertifikats durchführt bevor der ID-Token dem APV-Computersystem das Schreiben der Attributmengen genehmigt; und/oder
- wobei der ID-Token eine Prüfung der Leseberechtigung des APV-Computersystems mithilfe des Berechtigungszertifikats durchführt bevor der ID-Token dem APV-Computersystem das Lesen der Teil-Attributspezifikationen genehmigt;
- und wobei vorzugsweise das Berechtigungszertifikat des APV-Computersystems dem APV-Computersystem weder eine Berechtigung zum Lesen der Attributmengen von noch zum Schreiben von Attributspezifikationen in dem geschützten Speicherbereich des ID-Tokens zuweist.

16. Computersystem zur Bereitstellung von Attributen mit
- einem ID-Token (106),
- einem APV-Computersystem (199),
- mehreren AP-Computersystemen (172, 173, 174);
- einem Nutzer-Computersystem (100), das über ein Lesegerät (101) an den ID-Token und über ein Netzwerk an ein Dienst-Computersystem (150) und zumindest an das APV-Computersystem gekoppelt ist; und
- einem ID-Provider-Modul (136), wobei das ID-Provider-Modul Bestandteil des Dienst-Computersystems (150) ist oder an das Dienst-Computersystem über ein Netzwerk (116) operativ gekoppelt ist, wobei das Computersystem dazu konfiguriert ist, das Verfahren nach einem der Ansprüche 1-15 auszuführen.

## Claims

1. Method for reading attributes from an ID token (106) which is assigned to a user (102, wherein the ID token has a non-volatile electronic memory (118) with a protected memory area (124), wherein access to the protected memory area is only possible via a processor (128) of the ID token, comprising the following steps:
- sending (202) a service request (103) of a user from a user computer system (100) to a service computer system (150) which is coupled to an ID provider module (136);
- in response to receiving the service request, sending (208) an attribute specification (105) from the service computer system to the ID provider module, wherein the attribute specification specifies those attributes which the service computer system requires for providing the service requested by the service request, and mutual authentication of the ID provider module and of the ID token;
- after successful mutual authentication (204) of the ID provider module and of the ID token, writing (210) the attribute specification (105) into the protected memory area of the ID token by the ID provider module, and sending (214) a first message, that the attribute specification has been written, from the service computer system to the user computer system;
- in response to receiving the first message, sending (216) a trigger signal (T1) from the user computer system to an APV computer system (199), wherein the APV computer system is an attribute provider directory computer system, wherein the trigger signal is free of the attribute specification (105) and its parts, and contains an address (#106) of the ID token (106);
- in response to receiving the trigger signal, mutual authentication (218) of the APV computer system (199) and of the ID token using the address;
- after successful mutual authentication of the APV computer system and of the ID token, reading (222) multiple partial attribute specifications (AR1, ..., ARn) of the attribute specification (AR) from the protected memory area of the ID token by the APV computer system and identification (222) of multiple AP computer systems (172, 173, 174) which are each an attribute provider computer system, which is designed to provide the attributes of the partial attribute specifications;
- sending (226) each of the partial attribute specifications (AR1, ..., ARn) from the APV computer system to that one of the identified AP computer systems which is designed to provide the attributes specified in this partial attribute specification;
- in response to receiving each of the partial attribute specifications by the AP computer system identified for this, determining (228) a set (A1, ..., An) of attributes, which are specified in the partial attribute specifications, and sending (230) the determined attribute set from the AP computer system to the APV computer system;
- writing (232) the attribute sets (A1, ..., An) by the APV computer system onto the protected memory area of the ID token;
- sending (234) a termination signal (SAPV) from the APV computer system to the user computer system after successful writing of all attribute sets in the ID token;
- in response to receiving the termination signal, sending (238) a second (180) message from the user computer system to the service computer system in order to cause the service computer system to read the the written attribute sets (A1, A2, ..., An) from the protected memory area via the ID provider module.

2. Method according to claim 1, further comprising:
- after successful mutual authentication of the ID provider module and ID token, initializing the establishment of a first protected communication channel (SM[CA]#1) between the ID provider module and the ID token by the ID provider module, wherein writing the attribute specification (105) is carried out via the first protected communication channel;
- after successful mutual authentication of the APV computer system and the ID token, initializing the establishment of a second protected communication channel (SM[CA]#2) between the APV computer system and the ID token by the APV computer system, wherein the reading the partial attribute specifications is carried out via the second protected communication channel;
- wherein the second protected communication channel (SM[CA]#2) is maintained during the provision of the attributes by the AP computer systems; and
- wherein the writing all partial attribute sets (A1, ..., An) is carried out via the already established second protected communication channel (SM[CA]#2) used for reading the partial attribute specifications.

3. Method according to claim 2, wherein data, which are sent via the first or second protected communication channel, are protected from access by the user computer system.

4. Method according to one of claims 2-3, wherein the establishment of the first protected communication channel (SM[CA]#1) comprises:
- establishing or reactivating a local protected communication channel (SM[PACE]) between the user computer system (100) and the ID token;
- carrying out the mutual authentication of the user computer system (100) and the ID token (106) in order to establish the first protected communication channel, wherein authentication data are transferred via the local protected communication channel (SM[PACE]).

5. Method according to one of the preceding claims, wherein the ID token is free from software- or hardware-based program logic which is designed to initiate the establishment of new, or to activate existing communication channels to the user computer, the ID provider module, and/or the APV computer system, depending on the content of the protected memory area.

6. Method according to one of the previous claims, further comprising:
- in response to receiving the termination signal (SAPV), sending a switching command (SC[CA]#1) from the user computer system to the ID token in order to cause the ID token to activate the first protected communication channel (SM[CA]#1);
- reading the written partial attribute sets (A1, A2, ..., An) from the protected memory area by the ID provider module via the activated protected first protected communication channel (SM[CA]#1).

7. Method according to one of the preceding claims, further comprising:
- establishing a local protected communication channel (SM[PACE]) to transfer authentication data via the local protected communication channel as part of the mutual authentication of the ID token and the ID provider computer system;
- after successful writing of the attribute specification (AR) in the protected memory area, sending a switching command (SC[PACE]) from the APV computer system to the ID token via the first protected communication channel, wherein the switching command (SC[PACE] causes the ID token to reactivate a local protected communication channel (SM[PACE]).

8. Method according to one of the preceding claims, further comprising:
- in response to receiving the termination signal (SAPV) by the user computer system, sending a switching command (SC[CA]#1) via the activated local communication channel, wherein the switching command (SC[CA]#1) causes the ID token to activate the first protected communication channel (SM[CA]#1);
- reading the written attribute sets (A1, A2, ..., An) from the protected memory area by the ID provider module via the activated protected first protected communication channel (SM[CA]#1).

9. Method according to one of the preceding claims, further comprising:
- after successful writing of all attribute sets (A1, ..., An) in the protected memory area, deleting the partial attribute specifications (AR1, ..., ARn) from the ID token.

10. Method according to one of the preceding claims, further comprising:
- analysis of the attribute specification by the APV computer system or the service computer system to determine the partial attribute specifications (AR1-ARn), wherein the partial attribute specifications represent class-specific partial attribute specifications, which each specify attributes of only one defined class, wherein each of the AP computer systems is designed to provide attributes for one or more defined classes, and wherein the APV computer system is designed to selectively send each of the class-specific partial attribute specifications to that AP computer system which is designed to provide attributes of the corresponding attribute class.

11. Method according to one of the preceding claims, wherein the reading of multiple partial attribute specifications from the protected memory area of the ID token comprises:
- sending a signature request from the APV computer system to the ID token;
- in response to the signature request, generating a digital signature for each of the partial attribute specifications by the ID token by means of a private signing key (PrivK_{TOKEN}), securely stored in the ID token;
- carrying out the reading of multiple partial attribute specifications from the protected memory area of the ID token, wherein the partial attribute specifications are read as signed partial attribute specifications;
- checking the digital signatures of the read partial attribute specifications by the APV computer system using a public signature verification key (PubK_{TOKEN}), wherein the sending of the partial attribute specifications to the identified AP computer systems is only carried out for those partial attribute specifications whose signature check indicates that their digital signature is valid.

12. Method according to one of the preceding claims, further comprising:
- generating an asymmetrical cryptographic key pair by the ID token, wherein the key pair comprises a private decryption key (PrivK_{DEC}) and a public encryption key (PubK_{ENC}), wherein the private decryption key (PrivK_{DEC}) is not accessible to one of the AP computer systems or to the user computer system or to the APV computer system;
- signature of the public encryption key (PubK_{ENC}) using the private signing key (PrivK_{TOKEN}) of the ID token;
- reading the public encryption key (PubK_{ENC}) and the signature of the public encryption key (PubK_{ENC}) by the APV computer system;
- forwarding the public encryption key (PubK_{ENC}) to the identified AP computer systems;
- forwarding the signature of the public encryption key (PubK_{ENC}) by the APV computer system to the identified AP computer systems;
- checking the signature of the public encryption key (PubK_{ENC}) by each of the identified AP computer systems by means of the public signature verification key (PubK_{TOKEN}), and encrypting the attribute set (A1-An) determined by this by means of the public encryption key (PubK_{ENC}), wherein each of the AP computer systems only determines and provides the attributes if the signature of the public signature verification key (PubK_{TOKEN}) is valid, and wherein the APV computer system receives the determined attribute sets in encrypted form from the identified AP computer systems and writes the encrypted form into the protected memory of the ID token; and
- decrypting the encrypted attribute sets (A1-An) by the ID token by means of the private decryption key (PrivK_{DEC}) and saving the attribute sets (A1-An) again in unencrypted form.

13. Method according to claim 12,
wherein the asymmetrical cryptographic key pair containing the private decryption key (PrivK_{DEC}) and the public encryption key (PubK_{ENC}) is temporarily generated, wherein preferably the longevity of the key pair is limited to the time up to carrying out the requested service or is limited to the longevity of the second communication channel (SM[CA]#2).

14. Method according to one of the preceding claims,
- wherein the authentication of the ID provider module is carried out with respect to the ID token with the aid of an authentication certificate (144) of the ID provider module, in that read access of the ID provider module is specified for reading the attribute sets (A1-An) from the ID token, wherein the ID token carries out a check of the read permissions of the ID provider module with the aid of the authorization certificate for the read access of the ID provider module; and
- wherein write access of the ID provider module is specified in the authorization certificate for writing the attribute specification and/or the partial attribute specifications (AR1-ARn) in the ID token, wherein the ID token carries out a check of the write permission of the ID provider module with the aid of the authorization certificate for the write access of the ID provider module.

15. Method according to one of the preceding claims,
- wherein, the authentication of the APV computer system (199) is carried out with respect to the ID token with the aid of an authorization certificate of the APV computer system, in that read access for reading the partial attribute specifications is specified and/or in that write access of the APV computer system for writing the attribute sets (A1-An) in the ID token is specified; and
- wherein the ID token carries out a check of the write permission of the APV computer system with the aid of the authorization certificate before the ID token approves the APV computer system for writing the attribute sets; and/or
- wherein the ID token carries out a check of the read permission of the APV computer system with the aid of the authorization certificate before the ID token approves the APV computer system for reading the attribute sets;
- and wherein the authorization certificate of the APV computer system preferably does allocate to the APV computer system neither an authorization for reading the attribute sets nor for writing attribute sets in the protected memory area of the ID token.

16. Computer system for providing attributes, comprising
- an ID token (106)
- an APV computer system (199),
- multiple AP computer systems (172, 173, 174);
- a user computer system (100), which is coupled via a reader (101) to the ID token and via a network to a service computer system (150) and at least to the APC computer system; and
- an ID provider module (136), wherein the ID provider module is a component of the service computer system (150), or is operatively coupled to the service computer system via a network (116), wherein the computer system is configured to carry out the method according to one of claims 1-15.

## Revendications

1. Procédé de lecture d'attributs à partir d'un jeton d'ID (106), qui est associé à un utilisateur (102), où le jeton d'ID présente une mémoire (118) électronique non volatile avec une zone de mémoire (124) sécurisée, où un accès à la zone de mémoire sécurisée n'est possible que par le biais d'un processeur (128) du jeton d'ID, avec les étapes suivantes :
- l'envoi (202) d'une demande de service (103) d'un utilisateur par un système informatique d'utilisateur (100) à un système informatique de service (150), lequel est couplé avec un module fournisseur d'ID (136) ;
- en réponse à la réception de la demande de service, l'envoi (208) d'une spécification d'attributs (105) du système informatique de service au module fournisseur d'ID, où la spécification d'attributs spécifie les attributs en question dont a besoin le système informatique de service pour la délivrance du service demandé avec la demande de service, et l'authentification réciproque du module fournisseur d'ID et du jeton d'ID ;
- après l'authentification (204) réciproque réussie du module fournisseur d'ID et du jeton d'ID, l'écriture (210) de la spécification d'attributs (105) dans la zone de mémoire sécurisée du jeton d'ID par le module fournisseur d'ID et l'envoi (214) d'un premier message que la spécification d'attributs a été écrite, du système informatique de service au système informatique d'utilisateur ;
- en réponse à la réception du premier message, l'envoi (216) d'un signal de déclenchement (T1) du système informatique d'utilisateur à un système informatique RFA (199), où le système informatique RFA est un système informatique de répertoire de fournisseur d'attributs, où le signal de déclenchement est libre par rapport à la spécification d'attributs (105) et de ses composantes et contient une adresse (#106) du jeton d'ID (106) ;
- en réponse à la réception du signal de déclenchement, l'authentification réciproque (218) du système informatique RFA (199) et du jeton d'ID moyennant l'emploi de l'adresse ;
- après l'authentification réciproque réussie du système information RFA et du jeton d'ID, la lecture (222) de plusieurs spécifications d'attributs partielles (AR1, ..., Arn) de la spécification d'attributs (AR) à partir de la zone de mémoire sécurisée du jeton d'ID par le système informatique RFA et l'identification (222) de plusieurs systèmes informatiques de fournisseurs d'attributs FA (172, 173, 174), lesquels sont respectivement un système informatique fournisseur d'attributs, lequel est conçu pour mettre à disposition des attributs d'une des spécifications d'attributs partielles ;
- l'envoi (226) de chacune des spécifications d'attributs partielles (AR1, ..., Arn) du système informatique RFA au système informatique FA identifié en question, lequel est conçu pour mettre à disposition les attributs spécifiés dans cette spécification d'attributs partielle ;
- en réponse à la réception de chacune des spécifications d'attributs partielles par le système informatique FA identifié pour celles-ci, la détermination (228) d'une quantité (A1, ..., An) d'attributs qui sont spécifiés dans la spécification d'attributs partielle, et l'envoi (230) de la quantité d'attributs déterminée du système informatique FA au système informatique RFA ;
- l'écriture (232) des quantités d'attributs (A1, ..., An) par le système informatique RFA dans la zone de mémoire sécurisée du jeton d'ID ;
- l'envoi (234) d'un signal de résiliation (SAPV) du système informatique RFA au système informatique d'utilisateur après l'écriture réussie de toutes les quantités d'attributs dans le jeton d'ID ;
- en réponse à la réception du signal de résiliation, l'envoi (238) d'un deuxième (180) message du système informatique d'utilisateur au système informatique de service afin de faire en sorte que le système informatique de service lise les quantités d'attributs (A1, ..., An) écrites à partir de la zone de mémoire sécurisée par le biais du module fournisseur d'ID.

2. Procédé selon la revendication 1, en outre avec :
- après l'authentification réciproque réussie du module fournisseur d'ID et du jeton d'ID, l'initialisation de l'établissement d'un premier canal de communication (SM[CA]#1) sécurisé entre le module fournisseur d'ID et le jeton d'ID par le module fournisseur d'ID, où l'écriture de la spécification d'attributs (105) a lieu par le biais du premier canal de communication sécurisé ;
- après l'authentification réciproque réussie du système informatique RFA et du jeton d'ID, l'initialisation de l'établissement d'un deuxième canal de communication (SM[CA]#2) sécurisé entre le système informatique RFA et le jeton d'ID par le système informatique RFA, où la lecture des spécifications d'attributs partielles a lieu par le biais du deuxième canal de communication (SM[CA]#2) sécurisé ;
- où le deuxième canal de communication (SM[CA]#2) sécurisé est maintenu en activité pendant la mise à disposition des attributs par les systèmes informatiques FA ; et
- où l'écriture de toutes les quantités d'attributs partielles (A1, ..., An) a lieu par le biais du deuxième canal de communication (SM[CA]#2) sécurisé déjà établi et employé pour la lecture des spécifications d'attributs partielles.

3. Procédé selon la revendication 2, dans lequel des données qui sont transmises par le biais du premier ou du deuxième canal de communication sécurisé sont protégées avant l'accès du système informatique d'utilisateur.

4. Procédé selon l'une des revendications 2 ou 3, dans lequel l'établissement du premier canal de communication (SM[CA]#1) sécurisé comprend :
- l'établissement ou la réactivation d'un canal de communication local sécurisé (SM[PACE]) entre le système informatique d'utilisateur (100) et le jeton d'ID ;
- l'exécution de l'authentification réciproque du système informatique d'utilisateur (100) et du jeton d'ID (106) afin d'élaborer le premier canal de communication sécurisé, où des données d'authentification sont transmises par le biais du canal de communication sécurisé local (SM[PACE]).

5. Procédé selon l'une des revendications précédentes, dans lequel le jeton d'ID est exempt d'une logique de programme basée sur des logiciels ou sur du matériel qui est conçue, en fonction du contenu de la zone de mémoire sécurisée, pour initier l'établissement de nouveaux canaux de communication, ou l'activation de canaux subsistants vis-à-vis du système informatique d'utilisateur, du module fournisseur d'ID ou du système informatique RFA.

6. Procédé selon l'une des revendications précédentes, en outre avec :
- en réponse à la réception du signal de résiliation (SAPV), l'envoi d'une commande de commutation (SC[CA]#1) du système informatique d'utilisateur au jeton d'ID afin de faire en sorte que le jeton d'ID active le premier canal de communication sécurisé (SM[CA]#1) ;
- la lecture des quantités d'attributs partielles (A1, A2, ..., An) à partir de la zone de mémoire sécurisée par le module fournisseur d'ID par le biais du premier canal de communication sécurisé (SM[CA]#1) activé.

7. Procédé selon l'une des revendications précédentes, en outre avec :
- l'établissement d'un canal de communication sécurisé local (SM[PACE]) pour la transmission de données d'authentification par le biais du canal de communication sécurisé local dans le cadre de l'authentification réciproque du jeton d'ID et du système informatique fournisseur d'ID ;
- après l'écriture réussie de la spécification d'attributs (AR) dans la zone de mémoire sécurisée, l'envoi d'une commande de commutation (SC[PACE]) du système informatique RFA au jeton d'ID par le biais du premier canal de communication sécurisé, où la commande de commutation (SC[PACE]) fait en sorte que le jeton d'ID réactive un canal de communication sécurisé local (SM[PACE]).

8. Procédé selon l'une des revendications précédentes, en outre avec :
- en réponse à la réception du signal de résiliation (SAPV) par le système informatique d'utilisateur, l'envoi d'une commande de commutation (SC[CA]#1) par le biais du canal de communication local activé, où la commande de commutation (SC[CA]#1) fait en sorte que le jeton d'ID active le premier canal de communication sécurisé (SM[CA]#1) ;
- la lecture des quantités d'attributs (A1, A2, ..., An) écrites à partir de la zone de mémoire sécurisée par le module fournisseur d'ID par le biais du premier canal de communication sécurisé (SM[CA]#1) activé.

9. Procédé selon l'une des revendications précédentes, en outre avec :
- après l'écriture réussie de toutes les quantités d'attributs (A1, ..., An) dans la zone de mémoire sécurisée, l'effacement des spécifications d'attributs partielles (AR1, ..., Arn) du jeton d'ID.

10. Procédé selon l'une des revendications précédentes, en outre avec :
- l'analyse de la spécification d'attributs par le système informatique RFA ou le système informatique de service pour la détermination des spécifications d'attributs partielles (AR1 à ARn), où les spécifications d'attributs partielles représentent des spécifications d'attributs partielles spécifiques à des classes, lesquelles ne spécifient que des attributs d'une classe déterminée, où chacun des systèmes informatiques FA est conçu pour mettre à disposition des attributs d'une ou de plusieurs classes définies et où le système informatique RFA est conçu pour envoyer chacune des spécifications d'attributs partielles spécifique à une classe de manière sélective au système informatique FA en question qui est conçu pour la mise à disposition d'attributs de la classe d'attributs correspondante.

11. Procédé selon l'une des revendications précédentes, dans lequel la lecture de plusieurs spécifications d'attributs partielles à partir de la zone de mémoire sécurisée du jeton d'ID comprend :
- la transmission d'une demande de signature du système informatique RFA au jeton d'ID ;
- en réponse à la demande de signature, la création d'une signature numérique de chacune des spécifications d'attributs partielles par le jeton d'ID au moyen d'une clé de signature privée (Priv-Kⱼₑₜₒₙ) stockée protégée dans le jeton d'ID ;
- l'exécution de la lecture de plusieurs spécifications d'attributs partielles à partir de la zone de mémoire sécurisée du jeton d'ID, où les spécifications d'attributs partielles sont lues sous forme de spécifications d'attributs partielles signées ;
- la vérification des signatures numériques des spécifications d'attributs partielles lues par le système informatique RFA avec une clé de signature publique (PubKⱼₑₜₒₙ), où l'envoi des spécifications d'attributs partielles aux systèmes informatiques FA identifiés a lieu uniquement pour les spécifications d'attributs partielles en question dont la vérification de signature a pour résultat que leur signature numérique est valide.

12. Procédé selon l'une des revendications précédentes, comprenant en outre :
- la création d'une paires de clés cryptographiques asymétrique par le jeton d'ID, où la paire de clés comprend une clé de décryptage privée (PrivK_{dec}) et une clé d'encryptage publique ((PUbK_{enc}), où la clé de décryptage privée (PrivK_{dec}) n'est accessible ni par l'un des systèmes FA, ni le système informatique d'utilisateur, ni le système informatique RFA ;
- la signature de la clé d'encryptage publique (PubK_{enc}) avec la clé de signature privée (PrivKⱼₑₜₒₙ) du jeton d'ID ;
- la lecture de la clé d'encryptage publique (PubK_{enc}) et de la signature de la clé d'encryptage publique (PubK_{enc}) par le système informatique RFA ;
- la transmission de la clé d'encryptage publique (PubK_{enc}) aux systèmes informatiques FA identifiés ;
- la transmission de la signature de la clé d'encryptage publique (PubK_{enc}) par le système informatique RFA aux systèmes informatiques FA identifiés ;
- par chacun des systèmes informatiques FA identifiés, la vérification de la signature de la clé d'encryptage publique (PubK_{enc}) au moyen de la clé de vérification de signature publique (PubKⱼₑₜₒₙ) et le cryptage de la quantité d'attributs (A1 à An) déterminés par celle-ci au moyen de la clé d'encryptage publique (PubK_{enc}), où chacun des systèmes informatiques FA ne détermine et ne met à disposition les attributs que si la signature de la clé de vérification de signature publique (PubK_{enc}) est valide, et où le système informatique RFA reçoit les quantités d'attributs déterminées sous forme cryptée à partir des systèmes informatiques FA identifiés et les écrit sous forme cryptée dans la mémoire sécurisée du jeton d'ID ; et
- le décryptage des quantités d'attributs (A1 à An) cryptées par le jeton d'ID au moyen de la clé de décryptage privée (PrivK_{dec}) et le nouveau stockage des quantités d'attributs (A1 à An) sous forme non cryptée.

13. Procédé selon la revendication 1, dans lequel la paire de clés cryptographiques asymétrique contenant la clé de décryptage privée (PrivK_{dec}) et la clé d'encryptage publique (PubK_{enc}) est créée temporairement, où, de préférence, la durée de vie de la paire de clés est limitée dans le temps jusqu'à l'exécution du service demandé ou est limitée avec la durée de vie du deuxième canal de communication (SM[CA]#2).

14. Procédé selon l'une des revendications précédentes,
- dans lequel l'authentification du module fournisseur d'ID vis-à-vis du jeton d'ID a lieu à l'aide d'un certificat d'autorisation (144) du module fournisseur d'ID, dans lequel des droits de lecture du module fournisseur d'ID sont spécifiés pour la lecture des quantités d'attributs (A1 à An) à partir du jeton d'ID, où le jeton d'ID exécuté une vérification de l'autorisation de lecture du module fournisseur d'ID pour les accès en lecture du module fournisseur d'ID à l'aide du certificat d'autorisation ; et
- dans lequel des droits d'écriture du module fournisseur d'ID sont spécifiés dans le certificat d'autorisation pour l'écriture de la spécification d'attributs et/ou des spécifications d'attributs partielles (AR1 à Arn) dans le jeton d'ID, où le jeton d'ID exécute une vérification de l'autorisation d'écriture du module fournisseur d'ID pour les accès en écriture du module fournisseur d'ID à l'aide du certificat d'autorisation.

15. Procédé selon l'une des revendications précédentes,
- dans lequel l'authentification du système informatique RFA (199) vis-à-vis du jeton d'ID a lieu à l'aide d'un certificat d'autorisation du système informatique RFA en ce que des droits de lecture sont spécifiés pour la lecture des spécifications d'attributs partielles, et/ou des droits d'écriture du système informatique RFA sont spécifiés pour l'écriture des quantités d'attributs (A1 à An) à partir du jeton d'ID ; et
- dans lequel le jeton d'ID exécute une vérification de l'autorisation d'écriture du système informatique RFA à l'aide du certificat d'autorisation avant que le jeton d'ID ne permette au système informatique RFA l'écriture des quantités d'attributs, et/ou
- dans lequel le jeton d'ID exécute une vérification de l'autorisation de lecture du système informatique RFA à l'aide du certificat d'autorisation avant que le jeton d'ID ne permette au système informatique RFA la lecture des spécifications d'attributs partielles ;
- et dans lequel, de préférence, le certificat d'autorisation du système informatique RFA n'attribue au système informatique RFA une autorisation ni pour la lecture des quantités d'attributs, ni pour l'écriture de spécifications d'attributs dans la zone de mémoire sécurisée du jeton d'ID.

16. Système informatique permettant la mise à disposition d'attributs avec
- un jeton d'ID (106),
- un système informatique RFA (199),
- plusieurs systèmes informatiques FA (172, 173, 174) ;
- un système informatique d'utilisateur (100) qui est couplé par le biais d'un lecteur (101) au jeton d'ID et par le biais d'un réseau à un système informatique de service (150) et au moins au système informatique RFA ; et
- un module fournisseur d'ID (136), où le module fournisseur d'ID est une composante du système informatique de service (150) ou est couplé opérationnellement au système informatique de service par le biais d'un réseau (116), où le système informatique est conçu pour exécuter le procédé selon l'une des revendications 1 à 15.
